(19) Europäisches Patentamt / European Patent Office / Office européen des brevets

(11) **EP 3 230 027 B1**

(12) **EUROPÄISCHE PATENTSCHRIFT**

(45) Veröffentlichungstag und Bekanntmachung des Hinweises auf die Patenterteilung:
**20.02.2019 Patentblatt 2019/08**

(21) Anmeldenummer: **15807847.7**

(22) Anmeldetag: **07.12.2015**

(51) Int Cl.:
**B27N 3/00** (2006.01)     **B27N 3/18** (2006.01)
**B27N 3/24** (2006.01)     **B27N 3/02** (2006.01)

(86) Internationale Anmeldenummer:
**PCT/EP2015/078810**

(87) Internationale Veröffentlichungsnummer:
**WO 2016/091797 (16.06.2016 Gazette 2016/24)**

(54) **VERFAHREN ZUR HERSTELLUNG VON MEHRSCHICHTIGEN LIGNOCELLULOSEWERKSTOFFEN MIT EINEM KERN UND MINDESTENS EINER OBEREN UND EINER UNTEREN DECKSCHICHT UND SPEZIELLEN EIGENSCHAFTEN DES KERNS**

METHOD FOR THE PREPARATION OF MULTILAYER LIGNOCELLULOSE MATERIALS WITH A CORE AND AT LEAST ONE UPPER AND ONE LOWER COVER LAYER AND SPECIAL PROPERTIES OF THE CORE

PROCÉDÉ DE FABRICATION DE MATIÈRES À BASE DE LIGNOCELLULOSE MULTICOUCHES AYANT UN COEUR ET AU MOINS UNE COUCHE DE RECOUVREMENT INFÉRIEURE ET SUPÉRIEURE ET PROPRIÉTÉS SPÉCIALES DU COEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2014 EP 14197059**

(43) Veröffentlichungstag der Anmeldung:
**18.10.2017 Patentblatt 2017/42**

(73) Patentinhaber: **BASF SE**
**67056 Ludwigshafen am Rhein (DE)**

(72) Erfinder:
• **WEINKOETZ, Stephan**
**67434 Neustadt (DE)**
• **HENNIG, Ingolf**
**68809 Neulussheim (DE)**
• **SCHADE, Matthias**
**67117 Limburgerhof (DE)**
• **KRUG, Detlef**
**01277 Dresden (DE)**
• **MAEBERT, Marco**
**01665 Klipphausen (DE)**

(74) Vertreter: **BASF IP Association**
**BASF SE**
**G-FLP-C006**
**67056 Ludwigshafen (DE)**

(56) Entgegenhaltungen:
EP-A1- 2 699 396     WO-A1-92/01540
WO-A1-2009/080748     WO-A1-2012/080338
DE-A1- 10 315 922     DE-A1-102006 028 392

• PEREIRA C M C ET AL: "High frequency heating of medium density fiberboard (MDF): theory and experiment", CHEMICAL ENGINEERING SCIENCE, OXFORD, GB, Bd. 59, Nr. 4, 1. Februar 2004 (2004-02-01), Seiten 735-745, XP004492729, ISSN: 0009-2509, DOI: 10.1016/J.CES.2003.09.038

**EP 3 230 027 B1**

**Beschreibung**

Die vorliegende Erfindung betrifft ein Verfahren zur Herstellung von mehrschichtigen Lignocellulosewerkstoffen mit einem Kern und mindestens einer oberen und einer unteren Deckschicht und speziellen Eigenschaften des Kerns.

Aus der WO-A-97/28936 ist bekannt, dass lignocellulosehaltige Teilchen zu einer Matte gestreut, die anschließend vorverdichtet, beim Vorverdichten mittels Hochfrequenzenergie erwärmt und schließlich in einer Heißpresse zu einer Platte gepresst werden. Nachteilig an diesem Verfahren ist, dass keine Temperaturunterschiede zwischen äußeren und inneren Schichten gezielt eingestellt werden können.

Aus der US-A-3 649 396 ist ein Verfahren zur Herstellung von Spanplatten bekannt, bei dem die beleimten Späne in drei Schichten so gestreut werden, dass die innere Schicht eine höhere Temperatur hat als die beiden äußeren. Dies geschieht durch Erwärmen des Streugutes für die innere Schicht auf bis zu 75°C nach dem Beleimen und vor dem Streuen.

Aus der DE-A-44 12 515 ist ein Verfahren zur Herstellung von ein- oder mehrschichtigen Holzwerkstoffplatten bekannt, bei dem das mit Bindemittel gemischte Ausgangsmaterial vor dem Streuen mittels Hochfrequenz oder Mikrowelle erwärmt wird. Bei dreischichtigen Platten kann ausschließlich das Mittelschichtmaterial erwärmt werden.

Aus der DE-C-29 08 470 ist eine Vorrichtung zur diskontinuierlichen Herstellung von Span- oder Faserplatten bekannt, in der eine Hochfrequenzheizeinrichtung so eingebaut ist, dass die noch nicht vollständig gestreute Matte (zum Zeitpunkt der Energieeintragung ist nur die untere Deckschicht und die Mittelschicht gestreut) beim Rückfahrvorgang der Streueinheit während der Verpressung eines vorangehenden Vliesabschnitts, erwärmt wird. Dabei wird die Energie vor allem in die Mittelschicht eingetragen. Anschließend wird die obere Deckschicht darüber gestreut. Dabei dient die untere Deckschicht als Isolation.

Alle diese Verfahren haben verfahrenstechnische Nachteile.

Demgemäß wurde ein neues und verbessertes Verfahren zur diskontinuierlichen oder kontinuierlichen, bevorzugt kontinuierlichen Herstellung von mehrschichtigen Lignocellulosewerkstoffen mit einem Kern und mindestens einer oberen und einer unteren Deckschicht, enthaltend die Verfahrensschritte

a) Mischen der Komponenten der einzelnen Schichten getrennt voneinander,
b) Schichtweises Streuen der Mischungen (für die Kernschicht und für die Deckschichten) zu einer Matte,
c) Vorverdichtung nach dem Streuen der einzelnen Schichten,
d) Anlegen eines hochfrequenten elektrischen Feldes vor, während und/oder nach der Vorverdichtung und anschließendes
e) Heißpressen,

wobei man im Verfahrensschritt a)
für den Kern die Lignocellulosepartikel A) [Komponente A)] mit

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],
für die Deckschichten die Lignocellulosepartikel G) [Komponente G)] mit
H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und
K) 0 bis 2 Gew.-% Alkali- oder Erdalkalisalze aus der Gruppe der Sulfate, Nitrate, Halogenide oder deren Gemische [Komponente K)]

vermischt, wobei nach Verfahrensschritt a) die Mischung für den Kern bezogen auf das Gesamttrockengewicht der Mischung der Komponenten A) bis F) zwischen 3 und 15 Gew.-% Wasser, die Mischung(en) für die Deckschichten bezogen auf das Gesamttrockengewicht der Mischung(en) der Komponenten G) bis K) zwischen 5 und 20 Gew.-% Wasser enthalten, und die Bedingungen

$$\text{Komponente F)} \geq 1{,}1 \cdot \text{Komponente K)}$$

und

$$[\text{Komponente F)} + \text{Komponente D)}] \geq 1{,}1 \cdot [\text{Komponente K)} + \text{Komponente I)}]$$

erfüllt sind, mehrschichtige Lignocellulosewerkstoffe, hergestellt durch ein Verfahren zur diskontinuierlichen oder kontinuierlichen, bevorzugt kontinuierlichen Herstellung von mehrschichtigen Lignocellulosewerkstoffen mit einem Kern und mindestens einer oberen und einer unteren Deckschicht, enthaltend die Verfahrensschritte

a) Mischen der Komponenten der einzelnen Schichten getrennt voneinander,
b) Schichtweises Streuen der Mischungen (für die Kernschicht und für die Deckschichten) zu einer Matte,
c) Vorverdichtung nach dem Streuen der einzelnen Schichten,
d) Anlegen eines hochfrequenten elektrischen Feldes vor, während und/oder nach der Vorverdichtung und anschließendes
e) Heißpressen,

wobei man im Verfahrensschritt a)
für den Kern die Lignocellulosepartikel A) [Komponente A)] mit

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],
für die Deckschichten die Lignocellulosepartikel G) [Komponente G)] mit
H) 1 bis 15 Gew.-% eines oder mehrerer Bindemittel ausgewählt aus der Gruppe bestehend aus Aminoplastharz, und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und
K) 0 bis 2 Gew.-% Alkali- oder Erdalkalisalze aus der Gruppe der Sulfate, Nitrate, Halogenide oder deren Gemische [Komponente K)]

vermischt, wobei nach Verfahrensschritt a) die Mischung für den Kern bezogen auf das Gesamttrockengewicht der Mischung der Komponenten A) bis F) zwischen 3 und 15 Gew.-% Wasser, die Mischung(en) für die Deckschichten bezogen auf das Gesamttrockengewicht der Mischung(en) der Komponenten G) bis K) zwischen 5 und 20 Gew.-% Wasser enthalten, und die Bedingungen

$$\text{Komponente F)} \geq 1{,}1 \cdot \text{Komponente K)}$$

und

$$[\text{Komponente F)} + \text{Komponente D)}] \geq 1{,}1 \cdot [\text{Komponente K)} + \text{Komponente I)}]$$

erfüllt sind,
sowie mehrschichtige Lignocellulosewerkstoffe mit einem Kern und mindestens einer oberen und einer unteren Deckschicht, in denen der Kern bezogen auf die Lignocellulosepartikel A) [Komponente A)] die Komponenten

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz

und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],
enthält, und in denen die Deckschichten bezogen auf die Lignocellulosepartikel G) [Komponente G)] die Komponenten
H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und
K) 0 bis 2 Gew.-% Alkali- oder Erdalkalisalze aus der Gruppe der Sulfate, Nitrate, Halogenide oder deren Gemische [Komponente K)]

enthalten, und die Bedingungen

$$\text{Komponente F)} \geq 1{,}1 \cdot \text{Komponente K)}$$

und

$$[\text{Komponente F)} + \text{Komponente D)}] \geq 1{,}1 \cdot [\text{Komponente K)} + \text{Komponente I)}]$$

erfüllt sind, gefunden.

Die Angaben der Gew.-% der Komponenten B) bis F) sind die Gewichte der jeweiligen Komponente bezogen auf das Trockengewicht der Ligoncellulosepartikel A) [Komponente A)]. Die Angaben der Gew.-% der Komponenten H) bis K) sind die Gewichte der jeweiligen Komponente bezogen auf das Trockengewicht der Ligoncellulosepartikel G) [Komponente G)].

Das Trockengewicht der Lignocellulosepartikel A) [Komponente A)] bzw. der Lignocellulosepartikel G) bedeutet in dieser Erfindung das Gewicht der Lignocellulosepartikel ohne das darin enthaltene Wasser. Es wird auch als atro-Gewicht (absolut trocken) bezeichnet. Die Gewichtsangaben der Komponenten B) bis F) sowie der Komponenten H) bis K) beziehen sich auf das Gewicht der jeweiligen Komponente ohne Wasser. Werden die Komponenten in wässriger Form, also beispielsweise in Form von wässrigen Lösungen oder Emulsionen, eingesetzt, dann wird das Wasser bei den Gewichtsangaben nicht berücksichtigt. Werden beispielsweise 5 kg 30%ige Ammoniumnitrat-Lösung als Komponente I) pro 100 kg Lignocellulosepartikel G) (Trockengewicht) eingesetzt, dann ergeben sich 1,5 Gew.-% Ammoniumnitrat. Bei Aminoplastharzen wird das Gewicht auf den Feststoffgehalt bezogen. Der Feststoffgehalt von Aminoplastharzen wird bestimmt, indem 1 g des Harzes in eine Wägschale eingewogen, 2 Stunden bei 120°C +/- 2°C in einem Trockenschrank getrocknet und der Rückstand nach Temperierung auf Raumtemperatur in einem Exsikkator gewogen wird. (Zeppenfeld, Grunwald, Klebstoffe in der Holz - und Möbelindustrie, DRW Verlag, 2. Auflage, 2005, Seite 286).

Zusätzlich enthalten alle Schichten Wasser, das bei den Gewichtsangaben der Komponenten A) bis K) nicht berücksichtigt wird.

Das Wasser kann aus der in den lignocellulosehaltigen Partikeln A) bzw. G) enthaltenen Restfeuchte, aus den Bindemitteln C) bzw. H), beispielsweise wenn das isocyanathaltige Bindemittel als wässrige Emulsion vorliegt oder wenn wässrige Aminoplastharze eingesetzt werden, aus zusätzlich zugegebenem Wasser, beispielsweise zum Verdünnen der Bindemittel oder zum Befeuchten der Deckschichten, aus den Additiven E) bzw. J), beispielsweise wässrige Paraffinemulsionen, aus den Ammoniumsalzen D) bzw. I), beispielsweise wässrige Ammoniumsalzlösungen, oder aus den expandierten Kunststoffteilchen B), wenn diese zum Beispiel mit Wasserdampf aufgeschäumt werden, stammen. Es kann auch Wasser unabhängig von den Komponenten zugesetzt werden, z.B. durch Zumischen von Wasser, oder Aufsprühen von Wasser. Der Wassergehalt der Mischung für den Kern beträgt nach Verfahrensschritt a) 3 bis 15 Gew.-%, bevorzugt 3,5 bis 12 Gew.-%, besonders bevorzugt 4 bis 10 Gew.-%, ganz besonders bevorzugt 5 bis 9 Gew.-% bezogen auf das Gesamttrockengewicht der Mischung der Komponenten A) bis F). Der Wassergehalt der Mischung(en) für die Deckschichten beträgt nach Verfahrensschritt a) 5 bis 20 Gew.-%, bevorzugt 6 bis 16 Gew.-%, besonders bevorzugt 7 bis 14 Gew.-%, ganz besonders bevorzugt 8 bis 13 Gew.-% bezogen auf das Gesamttrockengewicht der Mischung(en) der Komponenten G) bis K). Der Wassergehalt der Mischungen wird nach dem Verfahrensschritt a) nach der Darrmethode bestimmt (A. Wagenführ, F. Scholz, Taschenbuch der Holztechnik, 2. Auflage, 2012, Carl Hanser Verlag, Seite 84). Dazu wird eine Probe der jeweiligen Mischung im feuchten ($m_f$ = Masse feucht) und im darrtrockenen Zustand ($m_d$ = Masse darrtrocken) gewogen. Zur Bestimmung der Darrmasse erfolgt eine Trocknung bei 103 °C bis zur Massekonstanz. Anschließend wird die Probe im Exsikkator abgekühlt und die Masse im darrtrockenen Zustand bestimmt. Der Wassergehalt wird wie folgt berechnet:

$$\text{Wassergehalt [in Gew.-\%]} = [(m_f - m_d) / m_d] \cdot 100\%$$

Bevorzugt ist der Wassergehalt in der Mischung bzw. den Mischungen für die Deckschichten größer als im Kern oder gleich groß. Besonders bevorzugt ist der Wassergehalt [in Gew.-%] in der Mischung bzw. den Mischungen für die Deckschichten um 0,5 bis 4 Gew.-%, ganz besonders bevorzugt um 2 bis 4 Gew.-% größer als im Kern.

Der Aufbau der mehrschichtigen Lignocellulosewerkstoffe folgt folgendem Muster:

(1) Deckschicht (DS-A), die obere Deckschicht,
(2) Kern (Kern-B) und
(3) Deckschicht (DS-C), die untere Deckschicht,

wobei die Deckschichten DS-A und DS-C jeweils aus einer oder mehreren, also 1 bis 5, bevorzugt 1 bis 3, besonders bevorzugt 1 bis 2 Schichten unterschiedlicher Zusammensetzung aufgebaut sein können und die Zusammensetzungen Deckschichten DS-A und DS-C gleich oder unterschiedlich, bevorzugt gleich sind. Insbesondere besteht der Aufbau der mehrschichtigen Lignocellulosewerkstoffe aus einem Kern und einer oberen und einer unteren Deckschicht.

Zusätzlich zu den Deckschichten kann der Lignocellulosewerkstoff weitere äußere "Schutzschichten" enthalten, bevorzugt zwei weitere äußere Schichten, also eine obere Schutzschicht, die an die Deckschicht DS-A (bei einer Schicht) bzw. an die oberste der oberen Deckschichten DS-A (bei mehreren Schichten) angrenzt und eine untere Schutzschicht, die an die die Deckschicht DS-C (bei einer Schicht) bzw. die unterste der unteren Deckschichten DS-C (bei mehreren Schichten) angrenzt, die jeweils eine beliebige Zusammensetzung aufweisen. Diese Schutzschichten sind deutlich dünner als die Deckschichten. Das Massenverhältnis zwischen Schutzschichten und Deckschichten ist kleiner als 10:90, bevorzugt kleiner als 5:95. Ganz besonders bevorzugt sind keine Schutzschichten vorhanden.

Für das erfindungsgemäße Verfahren zur Herstellung der Lignocellosewerkstoffe gelten folgende Bedingungen (nach Verfahrensschritt a)):

Bedingung 1

Der Anteil an Komponente F) bezogen auf das Trockengewicht der Lignocellulosepartikel A) in der Mischung der Komponenten A) bis F) ist um mindestens den Faktor 1,1 höher als der Anteil Komponente K) bezogen auf das Trockengewicht der Lignocellulosepartikel G) in der Mischung der Komponenten G) bis K), also Komponente F) $\geq$ 1,1 $\cdot$ Komponente K). Das heißt, wenn der Anteil an Komponente K) in der Mischung der Komponenten G) bis K) beispielsweise 1 Gew.-% beträgt, dann ist der Anteil an Komponente F) in der Mischung der Komponenten A) bis F) mindestens 1,1 Gew.-%. Bevorzugt ist der Anteil an Komponente F) bezogen auf das Trockengewicht der Lignocellulosepartikel A) in der Mischung der Komponenten A) bis F) um mindestens den Faktor 1,5 (also Komponente F) $\geq$ 1,5 $\cdot$ Komponente K)), besonders bevorzugt um mindestens den Faktor 3 (also Komponente F) $\geq$ 3 $\cdot$ Komponente K)), ganz besonders bevorzugt um mindestens den Faktor 10 mal (also Komponente F) $\geq$ 10 $\cdot$ Komponente K)) höher als der Anteil der Komponente K) bezogen auf das Trockengewicht der Lignocellulosepartikel G) in der Mischung der Komponenten G) bis K). In einer ganz besonders bevorzugten Ausführungsform wird der Mischung der Komponenten G) bis J) keine Komponente K) zugesetzt.

Bedingung 2

Die Summe aus dem Anteil an Komponente F) und dem Anteil an Komponente D) jeweils bezogen auf das Trockengewicht der Lignocellulosepartikel A) in der Mischung der Komponenten A) bis F) ist um mindestens den Faktor 1,1 höher als die Summe aus dem Anteil der Komponente K) und dem Anteil der Komponente I) jeweils bezogen auf das Trockengewicht der Lignocellulosepartikel G) in der Mischung der Komponenten G) bis K), also [Komponente F) + Komponente D)] $\geq$ 1,1 $\cdot$ [Komponente K) + Komponente I)]). Das heißt, wenn der Anteil an Komponente K) in der Mischung der Komponenten G) bis K) beispielsweise 0,5 Gew.-% und der Anteil an Komponente I) 1,5 Gew.-% beträgt, dann muss die Summe aus dem Anteil an Komponente F) und dem Anteil an Komponente D) in der Mischung der Komponenten A) bis D) mindestens 1,1 $\cdot$ 2 Gew.-% = 2,2 Gew.-% betragen (also zum Beispiel Anteil an Komponente F) = 0,7 Gew.-% und Anteil an Komponente D) = 1,5 Gew.-%).

Bevorzugt ist die Summe aus dem Anteil an Komponente F) und dem Anteil an Komponente D) jeweils bezogen auf das Trockengewicht der Lignocellulosepartikel A) in der Mischung der Komponenten A) bis F) um mindestens den Faktor 1,5 höher (also [Komponente F) + Komponente D)] $\geq$ 1,5 $\cdot$ [Komponente K) + Komponente I)]), besonders bevorzugt um mindestens den Faktor 3 (also [Komponente F) + Komponente D)] ≥ 3 • [Komponente K) + Komponente I)]), ganz besonders bevorzugt um mindestens den Faktor 5 mal (also [Komponente F) + Komponente D)] ≥ 5 • [Komponente K) + Komponente I)]) als die Summe aus dem Anteil der Komponente K) und dem Anteil der Komponente I) -jeweils bezogen auf das Trockengewicht der Lignocellulosepartikel G) - in der Mischung der Komponenten G) bis K).

In der Regel ist im erfindungsgemäßen Verfahren der dielektrische Verlust (die dielektrische Absorption) nach Verfahrensschritt b) sowohl der obere(n) Deckschicht(en), als auch der untere(n) Deckschicht(en) unabhängig voneinander jeweils um mindestens 10%, also 10 bis 90%, bevorzugt um mindestens 15%, also 15 bis 80%, besonders bevorzugt um mindestens 20%, also 20 bis 70%, insbesondere um mindestens 25%, also 25 bis 60%, geringer als der dielektrische Verlust in der Schicht des Kerns.

Der dielektrische Verlust für jede einzelne Schicht der lignocellulosehaltigen Werkstoffe kann einzeln bestimmt werden.

Für die dielektrische Verschiebung gilt $D(\omega) = \varepsilon^*(\omega)E(\omega)$, wobei $E(\omega)$ das elektrische Feld der Frequenz $\omega$ ist und $\varepsilon^*(\omega)$ die komplexe Dielektrizitätskonstante bei der Frequenz $\omega$. $\varepsilon^*(\omega)$ ist eine komplexe Größe und setzt sich aus den Faktoren $\varepsilon_0$ (Permittivität des Vakuums) und $\varepsilon_r^*$ (relative Permittivität) zusammen, das heißt $\varepsilon^*(\omega) = \varepsilon_0 \, \varepsilon_r^*$. Die komplexe relative Permittivität lässt sich durch einen Real- und einen Imaginäranteil beschreiben: $\varepsilon_r^* = \varepsilon' - i\varepsilon''$, wobei die dielektrischen Verluste, also die Umwandlung von elektrische Energie in Wärmeenergie über den Imaginärteil $\varepsilon''$ erfasst werden. $\varepsilon''$ wird auch als dielektrischer Verlust bezeichnet. Die Verlustleistungsdichte p bei dielektrischer Erwärmung beträgt bezogen auf das Materialvolumen

$$p = \omega \cdot \varepsilon'' \cdot \varepsilon_0 \cdot E^2$$

Durch die Bestimmung des dielektrischen Verlusts einer Materialmischung kann also ermittelt werden, welcher Anteil der elektrischen Energie des angelegten Wechselfelds in Wärmeenergie umgewandelt wird.

Die Bestimmung des dielektrischen Verlusts der Mischungen A) bis F) und G) bis K) kann mittels einer Messkammer durchgeführt werden, die aus einem äußeren Metallzylinder und einem inneren Metallzylinder besteht. Der Aufbau entspricht dem eines Zylinderkondensators, wobei die Grundflächen des äußeren und des inneren Zylinders in derselben Ebene liegen und die beiden zylindrischen Oberflächen (Innenseite des äußeren und Außenseite des inneren Zylinders) koaxial sind. Die zu prüfende Mischung wird in den ringförmigen Zwischenraum gefüllt, der zwischen dem äußeren (Durchmesser 9,5 cm) und dem inneren Metallzylinder (Durchmesser 5 cm) liegt. Die Höhe der Füllung beträgt 11,9 cm. An den Zylinderkondensator wird ein elektrisches Wechselfeld angelegt und die dielektrische Antwort durch Messen des durch die Materialmischung fließenden Stroms bestimmt. Die Messung kann mittels eines LCR Meters oder eines Impedanzanalysators erfolgen. Der dielektrische Verlust setzt sich wie folgt zusammen: $\varepsilon'' = \varepsilon''_{dip} + \varepsilon''_{LF}$, hierbei ist $\varepsilon''_{dip}$ der dipolare Beitrag und $\varepsilon''_{LF}$ der Leitfähigkeitsbeitrag.

Die Bestimmung des dielektrischen Verlusts erfolgt bei der gleichen Frequenz, die zur Erwärmung im Verfahrensschritt d) verwendet wird. Dazu wird entweder direkt bei dieser Frequenz gemessen oder der Wert durch übliche Extrapolationsmethoden ermittelt.

Das erfindungsgemäße Verfahren lässt sich wie folgt durchführen:

Verfahrensschritt a)

Die Komponenten A), B), C), D), E) und F) (Zusammensetzung des Kerns) und Komponenten G), H), I), J) und K) (Zusammensetzung der Deckschichten) werden in der Regel in separaten Mischvorgängen gemischt, wobei in der Regel jeweils die Lignocellulosepartikel [Komponente A) bzw. Komponente G)] vorgelegt und die restlichen Komponenten B), C), D), E) und F) bzw. H), I), J) und K) in beliebiger Reihenfolge zugegeben werden. In einer bevorzugten Ausführungsform werden der Komponente A) zuerst die Komponente B) zugefügt und anschließend die Komponenten C), D), E) und F) in beliebiger Reihenfolge zugegeben. Es können auch Komponenten vorher separat gemischt werden, bevor sie zugegeben werden. Beispielsweise kann man Komponente A) vorlegen, gegebenenfalls mit Komponente B) mischen, und anschließend eine Mischung aus den Komponenten C), D), E) und F) oder einer Mischung aus C) und D) nachgefolgt von einer aus Mischung E) und F) zugeben.

Verfahrensschritt b)

Die erhaltene Mischung der Komponenten A), B), C), D), E) und F) und die Mischung(en) der Komponenten G), H), I), J) und K) werden übereinander zu einer Matte gestreut, so dass sich der erfindungsgemäße Aufbau der mehrschichtigen Lignocellulosewerkstoffe [nach dem Muster (1), (2), (3)] ergibt. In der Regel streut man die Mischungen dazu direkt z.B. auf ein Formband.

Dabei werden in der Regel die unteren Deckschichten, beginnend mit der äußersten Deckschicht bis zu der dem Kern nächstliegenden unteren Deckschicht, darauf die Kernschicht und anschließend die oberen Deckschichten, beginnend mit der dem Kern nächstliegenden oberen Deckschicht bis zu der äußersten Deckschicht, bevorzugt eine untere Deckschicht, darauf die Kernschicht und anschließend die obere Deckschicht gestreut.

Die eingesetzte Gesamtmenge der beiden Mischungen wird durch die Zieldichte, die Zieldicke und das Zielformat des herzustellenden Lignocellulosewerkstoffes bestimmt. Das Verhältnis der Gesamtmasse der gestreuten Menge der Mischung der Komponenten A), B), C), D), E) und F) für den Kern zu der Gesamtmasse der gestreuten Menge der Mischung(en) der Komponenten G), H), I), J) und K) für die Deckschichten beträgt in der Regel 100:1 bis 0,25:1, bevorzugt 10:1 bis 0,5:1, besonders bevorzugt 6:1 bis 0,75:1, insbesondere 4:1 bis 1:1

Die Streuung kann nach an sich bekannten Methoden wie Wurfsichtstreuung, oder Windsichtstreuung, oder z.B. mit Rollensystemen (siehe beispielsweise M. Dunky, P. Niemz, Holzwerkstoffe und Leime, Seite 119 bis 121, Springer Verlag Heidelberg, 2002) diskontinuierlich oder kontinuierlich, bevorzugt kontinuierlich, durchgeführt werden.

Verfahrensschritt c)

Nach dem Streuen jeder einzelnen Schicht kann eine Vorverdichtung stattfinden, bevorzugt wird die Vorverdichtung nach dem Streuen aller Schichten übereinander durchgeführt.

Die Vorverdichtung kann in der Regel entweder vor, während und/oder nach dem Verfahrensschritt d) durchgeführt werden.

Die Erwärmung im Verfahrensschritt d) auf erhöhte Temperatur erfolgt in der Regel entweder während oder nach der Vorverdichtung, bevorzugt nach der Vorverdichtung.

Die Vorverdichtung kann in einem, zwei oder mehreren Schritten erfolgen. Hierbei bestehen die Optionen, die Erwärmung durch Anlegen eines hochfrequenten elektrischen Feldes (Verfahrensschritt d)) vor dem ersten dieser Schritte, zwischen diesen Schritten, nach dem letzten dieser Schritte oder während eines, zweier oder mehrerer dieser Schritte durchzuführen. In einer bevorzugten Ausführungsform wird die gestreute Matte vorverdichtet und anschließend durch Anlegen eines hochfrequenten elektrischen Feldes erwärmt, wobei während dieser Erwärmung ggf. ein weiterer Vorverdichtungsschritt durchgeführt werden kann. Alternativ kann zusätzlich ein weiterer Vorverdichtungsschritt erfolgen, das heißt die gestreute Matte wird vorverdichtet, anschließend das hochfrequente elektrische Feld angelegt und währenddessen ggf. ein weiterer Vorverdichtungsschritt durchgeführt und schließlich noch nach dem Abschalten des hochfrequenten elektrischen Feldes ein weiterer Vorverdichtungsschritt durchgeführt.

Die Vorverdichtung erfolgt in der Regel bei einem Druck von 1 bis 30 bar, bevorzugt 2 bis 25 bar, besonders bevorzugt 3 bis 20 bar. Die Vorverdichtung bzw. die Vorverdichtungsschritte führen zu einer Matte, die zum Zeitpunkt Z eine Höhe von 20 bis 80%, bevorzugt 25 bis 70 %, besonders bevorzugt 27,5 bis 60%, ganz besonders bevorzugt 30 bis 50% der Höhe aufweist, die die Matte unmittelbar nach dem Streuen der Matte besaß. Als Zeitpunkt Z ist hierbei entweder der Zeitpunkt zu verstehen, wenn die Erwärmung im angelegten hochfrequenten elektrischen Feld abgeschlossen ist für den Fall, dass die Vorverdichtung ausschließlich vor und/oder während des Verfahrensschrittes d) erfolgt, oder der Zeitpunkt, wenn der letzte Vorverdichtungsschritt abgeschlossen ist, für den Fall, dass der letzte Vorverdichtungsschritt nach dem Verfahrensschritt d) erfolgt.

In einer besonderen Ausführungsform werden die obere oder untere, bevorzugt sowohl die obere als auch die untere Deckschicht, die die Grenzflächen zur Umgebung bilden, vor, während oder nach dem Vorverdichten mit 1 bis 100 g/m$^2$, bevorzugt 5 bis 80 g/m$^2$, besonders bevorzugt 15 bis 60 g/m$^2$ Wasser oder einer wässrigen Lösung, Emulsion oder Suspension eines Additivs behandelt. Als Additive können hierbei Trennmittel, Tenside oder Formaldehydfänger, beispielsweise Harnstoff oder Polyamine, eingesetzt werden. Die Konzentration an Additiv beträgt zwischen 0 und 65 Gew.-%, bevorzugt zwischen 0 und 50 Gew.-%. Besonders bevorzugt wird Wasser (0 Gew.-% Additive) verwendet.

a. Das Aufbringen auf die Unterseite der Matte erfolgt beispielsweise, indem man vor dem Streuen Wasser oder wässrige Lösung, Emulsion oder Suspension eines Additivs auf das Formband aufbringt,
b. das Aufbringen auf die Oberseite erfolgt beispielsweise durch Auftropfen, Aufwalzen, Aufgießen oder Besprühen, bevorzugt durch Besprühen, nach dem Streuen aller Schichten, vor dem ersten Vorverdichtungsschritt oder nach einem der Vorverdichtungsschritte , also in der Regel außerhalb des Vorverdichtungsvorgangs. Besonders bevorzugt erfolgt das Aufbringen auf die Oberseite vor dem ersten oder nach dem letzten Vorverdichtungsschritt, ganz besonders bevorzugt vor dem ersten Vorverdichtungsschritt.

Verfahrensschritt d)

Die Energie zur Erwärmung der Matte wird durch Anlegen eines hochfrequenten elektrischen Feldes eingebracht. Dabei wird der Kern B der Matte stärker erwärmt als die Deckschichten DS-A und DS-C. Dies wird dadurch erreicht, dass mit bestimmten Mengen und Mengenverhältnissen an Komponenten D), F), I) und K) in den Deckschichten und im Kern, wie weiter unten beschrieben, gearbeitet wird.

Bei dem angelegten hochfrequenten elektrischen Feld kann es sich um Mikrowellenstrahlung oder um ein hochfrequentes elektrisches Feld handeln, das nach Anlegen einer hochfrequenten Wechselspannungsfeldes an einen Plattenkondensator zwischen den beiden Kondensatorplatten entsteht.

Für die hochfrequenten elektromagnetischen Felder eignen sich Frequenzen von 100 kHz bis 30 GHz MHz, bevorzugt 6 MHz bis 3 GHz, besonders 13 MHz bis 41 MHz, insbesondere die jeweils national bzw. international freigegebenen Frequenzen wie 13,56 MHz, 27,12 MHz, 40,68 MHz, 2,45 GHz, 5,80 GHz, 24,12 GHz, besonders bevorzugt 13,56 und 27,12 MHz.

Die erforderliche elektrische Leistung im erfindungsgemäßen Verfahren beträgt in der Regel 10 bis 10.000 kWh, bevorzugt, 100 bis 5.000 kWh, besonders bevorzugt 500 bis 2.000 kWh.

Die erforderliche elektrische Feldstärke im erfindungsgemäßen Verfahren beträgt in der Regel 0,1 bis 10.000 V/mm, bevorzugt 1 bis 2.000 V/mm, besonders bevorzugt 10 bis 500 V/mm.

In einer besonders bevorzugten Ausführungsform kann zunächst ein Vorverdichtungsschritt und danach das Erwärmen durch Anlegen eines hochfrequenten Hochspannungsfelds durchgeführt werden. Dieser Vorgang kann entweder kontinuierlich oder diskontinuierlich, bevorzugt kontinuierlich erfolgen.

Hierzu kann die gestreute und vorverdichtete Matte mittels eines Förderbandes durch einen Bereich zwischen parallel angeordneten Plattenkondensatoren durchgeführt werden. Die mittlere Verweilzeit, in der das hochfrequente elektrische Feld auf die Matte einwirkt, beträgt in der Regel 0,1 bis 100 Sekunden, bevorzugt 0,1 bis 5 Sekunden, besonders bevorzugt zwischen 0,2 und 3 Sekunden, insbesondere 0,3 und 2 Sekunden pro mm Mattendicke zum Zeitpunkt des Anlegens des elektrischen Feldes.

Eine Vorrichtung für einen kontinuierlichen Prozess, um die Erwärmung mittels Anlegen eines hochfrequenten elektrischen Feldes nach der Vorverdichtung innerhalb der gleichen Maschine zu realisieren, ist beispielsweise in WO-A-97/28936 beschrieben.

Die Erwärmung unmittelbar nach dem Vorverdichtungsschritt kann auch in einer diskontinuierlich arbeitenden Hochfrequenz-Presse erfolgen, z.B. in einer Hochfrequenz-Presse, beispielsweise in der Presse HLOP 170 der Firma Hoefer Presstechnik GmbH.

In einer besonderen Ausführungsform erfolgt der Wärmeeintrag bis zum Erreichen dieser Temperatur innerhalb eines Zeitraums von 60 Sekunden, bevorzugt 40 Sekunden, besonders bevorzugt 20 Sekunden, ganz besonders bevorzugt innerhalb von 10 Sekunden.

Erfolgt die Erwärmung nach dem Vorverdichten, kann das Auffedern der Matte während der Erwärmung dadurch zurückgedrängt, minimiert bzw. verhindert werden, dass die Erwärmung in einem nach oben und unten begrenzten Raum durchgeführt wird. Die Begrenzungsflächen sind dabei so ausgeführt, dass der Energieeintrag möglich ist. Gegebenenfalls sind die Begrenzungsflächen so ausgeführt, dass sie einen Druck auf die Matte ausüben, der so groß ist, dass das Auffedern während der Erwärmung verhindert wird.

In einer besonderen Ausführungsform für einen kontinuierlichen Prozess handelt es sich bei diesen Begrenzungsflächen um Pressbänder, die durch Rollen angetrieben werden. Hinter diesen Pressbändern sind die Platten der Kondensatoren angeordnet. Die Matte wird dabei durch ein Paar von Kondensatorplatten geleitet, wobei sich zwischen Matte und oberer Kondensatorplatte das eine Pressband, zwischen Matte und unterer Kondensatorplatte das andere Pressband befindet. Eine der beiden Kondensatorplatten kann geerdet sein, so dass die Hochfrequenz-Heizung nach dem Prinzip der unsymmetrischen Einspeisung arbeitet.

Die Temperatur im Kern-B beträgt nach Verfahrensschritt d) in der Regel mindestens 60°C, bevorzugt mindestens 70°C, besonders bevorzugt mindestens 90°C, ganz besonders bevorzugt mindestens 100°C und höchstens 150°C, bevorzugt höchstens 140°C und besonders bevorzugt höchstens 135°C und ganz besonders bevorzugt 130°C. Der Temperaturbereich liegt in der Regel bei 60 bis 150°C, bevorzugt 70 bis 140°C, besonders bevorzugt 90 bis 135°C, insbesondere 100 bis 130°C.

Die Temperaturdifferenz zwischen dem Kern-B und den kälteren Deckschichten DS-A und DS-C beträgt nach Verfahrensschritt d) in der Regel mindestens 5°C, bevorzugt mindestens 10°C, besonders bevorzugt mindestens 15°C, ganz besonders bevorzugt mindestens 20°C und höchstens 50°C, bevorzugt höchstens 45°C und besonders bevorzugt höchstens 40°C. Die Temperaturbereich der Differenz liegt in der Regel bei 5 bis 50°C, bevorzugt 10 bis 45°C, besonders bevorzugt 15 bis 40°C, insbesondere 20 bis 40°C.

Die Temperaturangaben beziehen sich auf Messungen, die unmittelbar nach dem Verfahrensschritt d) durchgeführt werden. Als Temperatur des Kern-B und der Deckschichten DS-A und DS-C ist dabei jeweils die Temperatur in der Mitte der jeweiligen Schicht zu verstehen. Die Messung wird also in der Ebene des Kerns-B (bzw. der Deckschicht(en) DS-A bzw. der Deckschicht(en) DS-C) durchgeführt, wobei sie parallel zu den Oberflächen der Matte verläuft und dass oberhalb dieser Ebene und unterhalb dieser Ebene jeweils das gleiche Volumen an Mischungen A) bis F) (bzw. G) bis K)) innerhalb der jeweiligen Schicht vorliegt.

Diese Messung kann wie folgt erfolgen:

Unmittelbar nach dem Verfahrensschritt d) wird pro Schicht der Matte ein Temperaturmessfühler eingeführt, so dass die Spitze der Messfühler sich jeweils in der Mitte der Schichten befindet. Vorteilhaft werden die Messfühler parallel zu den im vorangegangenen Absatz beschriebenen Ebenen eingeführt. Beispielsweise wird bei einer dreischichtigen Matte, die aus einer oberen Deckschicht DS-A, einem Kern-B und einer unteren Deckschicht DS-C (die hinsichtlich Zusammensetzung und Menge der Deckschicht DS-A entspricht) und bei der nach Verfahrensschritt d) die Deckschichten DS-A und DS-C z.B. eine Dicke von 4 mm und der Kern-B eine Dicke von 10 mm aufweisen, ein Temperaturfühler in 2 mm Höhe (vom Boden der Matte aus gerechnet) für die Temperatur der DS-C, ein Temperaturfühler in 9 mm Höhe für die Temperatur des Kerns B und ein Temperaturfühler in 16 mm Höhe für die Temperatur der Deckschicht DS-A eingeführt.

Nach dem Verfahrensschritt d) kann ein weiterer Vorverdichtungsschritt stattfinden. Bevorzugt findet kein weiterer Vorverdichtungsschritt statt.

Verfahrensschritt e)

Die vorverdichtete und vorerwärmte Matte wird üblicherweise durch Kontakt mit beheizten Pressflächen, die Temperaturen von 80 bis 300°C, bevorzugt 120 bis 280°C, besonders bevorzugt 150 bis 250°C aufweisen, und bei einem Druck von 1 bis 50 bar, bevorzugt 3 bis 40 bar, besonders bevorzugt 5 bis 30 bar zu Lignocellulosewerkstoffen auf die gewünschte Dicke bzw. in die gewünschte Form gepresst. Das Pressen kann nach allen dem Fachmann bekannten Verfahren erfolgen (siehe Beispiele in "Taschenbuch der Spanplatten Technik" H.-J. Deppe, K. Ernst, 4. Aufl., 2000, DRW - Verlag Weinbrenner, Leinfelden-Echterdingen, Seite 232 bis 254, und "MDF- Mitteldichte Faserplatten" H.-J. Deppe, K. Ernst, 1996, DRW- Verlag Weinbrenner, Leinfelden-Echterdingen, Seite 93 bis 104). Bevorzugt werden kontinuierliche Pressverfahren, beispielsweise mit Doppelbandpressen, verwendet. Die Pressdauer beträgt normalerweise 2 bis 15 Sekunden pro mm Plattendicke, bevorzugt 2 bis 10 Sekunden pro mm Plattendicke, besonders bevorzugt 2 bis 6 Sekunden pro mm Plattendicke, insbesondere 2 bis 4 Sekunden pro mm Plattendicke, kann davon jedoch auch deutlich abweichen und auch bis zu mehreren Minuten, z.B. bis zu 5 Minuten pro mm Plattendicke dauern.

In einer bevorzugten Ausführungsform liegt der Verdichtungsfaktor V im Verfahrensschritt e), der sich aus dem Quotienten aus $d_v$ und $d_n$ ($V = d_v / d_n$) ergibt, zwischen 1,02 und 4, bevorzugt zwischen 1,05 und 2, besonders bevorzugt zwischen 1,1 und 1,5, ganz besonders bevorzugt zwischen 1,1 und 1,3. $d_v$ ist dabei die Dicke der Matte vor dem Verfahrensschritt e) und $d_n$ ist die Dicke der Platte nach dem Verfahrensschritt e).

Die Komponenten der Mischungen für den Kern A), B), C), D), E), F) und die Komponenten der Mischungen für die Deckschichten G), H), I), J), K) haben folgende Bedeutungen.

Komponente A) und G):

Als Rohstoff für die Lignocellulosepartikel A) und G) eignet sich jede beliebige Holzart oder deren Mischungen, beispielsweise Fichten-, Buchen-, Kiefern-, Lärchen-, Linden-, Pappeln-, Eukalyptus-, Eschen-, Kastanien-, Tannenholz oder deren Mischungen, bevorzugt Fichten-, Buchenholz oder deren Mischungen, insbesondere Fichtenholz. Es können beispielsweise Holzteile wie Holzlagen, Holzstreifen (Strands), Holzspäne, Holzfasern, Holzstaub oder deren Mischungen, bevorzugt Holzspäne, Holzfasern, Holzstaub und deren Mischungen, besonders bevorzugt Holzspäne, Holzfasern oder deren Mischungen - wie sie für die Herstellung von Spanplatten, MDF (Mitteldichte Faserplatten) und HDF (Hochdichte Faserplatten) eingesetzt werden. Die Lignocellulosepartikel können auch von holzhaltigen Pflanzen wie Flachs, Hanf, Getreide oder anderen Einjahrespflanzen stammen, bevorzugt von Flachs oder Hanf. Besonders bevorzugt werden Holzspäne eingesetzt, wie sie bei der Herstellung von Spanplatten verwendet werden.

Ausgangsmaterialien für die Lignocellulosepartikel sind üblicherweise Rundhölzer, Durchforstungshölzer, Resthölzer, Waldholzabfälle, Industrieresthölzer, Gebrauchthölzer, Produktionsabfälle aus der Holzwerkstoffproduktion, gebrauchte Holzwerkstoffe sowie lignocellulosehaltige Pflanzen. Die Aufbereitung zu den gewünschten lignocellulosehaltigen Partikeln, beispielsweise zu Holzpartikeln wie Holzspäne oder Holzfasern, kann nach an sich bekannten Verfahren erfolgen (z.B. M. Dunky, P. Niemz, Holzwerkstoffe und Leime, Seite 91 bis 156, Springer Verlag Heidelberg, 2002).

Die Größe der Lignocellulosepartikel kann in weiten Grenzen variiert werden und in weiten Grenzen schwanken.

Wenn es sich bei den Lignocellulosepartikeln A) und G) um Lignocellulosefasern handelt, dann ist die volumengewichtete mittlere Faserlänge der Komponente G) der Deckschichten bevorzugt kleiner oder gleich der volumengewichteten mittleren Faserlänge der Komponente A) im Kern der mehrschichtigen Lignocellulosewerkstoffe. Das Verhältnis der volumengewichteten mittleren Faserlängen ($\overline{X}_{Strecke}$) der Komponente G) zur volumengewichteten mittleren Faserlängen ($\overline{X}_{Strecke}$) der Komponente A) kann in weiten Grenzen variiert werden und liegt in der Regel bei 0,1:1 bis 1:1, bevorzugt 0,5:1 bis 1:1, besonders bevorzugt 0,8:1 bis 1:1.

Die volumengewichtete mittlere Faserlänge ($\overline{X}_{Strecke}$) der Komponente A) beträgt in der Regel 0,1 bis 20 mm, bevorzugt 0,2 bis 10 mm, besonders bevorzugt 0,3 bis 8 mm, ganz besonders bevorzugt 0,4 bis 6 mm.

Die volumengewichtete mittlere Faserlänge $\overline{X}_{Strecke}$ wird mittels digitaler Bildanalyse bestimmt. Beispielsweise kann ein Gerät der Reihe Camsizer® der Firma Retsch Technology verwendet werden. Dabei wird von jeder einzelnen Faser einer representativen Probe $X_{Strecke}$ bestimmt. $X_{Strecke}$ wird berechnet aus der Fläche der Partikelprojektion A und dem Martin-Durchmesser $X_{Ma\_min}$. Dabei gilt $X_{Strecke} = X_{Ma\_min} / A$. Aus den Einzelwerten wird der volumengewichtete Mittelwert $\overline{X}_{Strecke}$ gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).

Wenn es sich bei den Lignocellulosepartikeln A) und G) um Lignocellulosestreifen (Strands) oder Lignocellulosespäne handelt, dann ist der volumengewichtete mittlere Partikeldurchmesser der Komponente G) der Deckschichten bevorzugt kleiner oder gleich dem volumengewichteten mittleren Partikeldurchmesser der Komponente A) im Kern der mehrschichtigen Lignocellulosewerkstoffe. Das Verhältnis des volumengewichtete mittlere Partikeldurchmesser $\overline{X}_{Fe\,max}$ der Komponente G) zum volumengewichteten mittleren Partikeldurchmesser $\overline{X}_{Fe\,max}$ der Komponente A) kann in weiten Grenzen variiert werden und liegt in der Regel bei 0,01:1 bis 1:1, bevorzugt 0,1:1 bis 0,95:1, besonders bevorzugt 0,5:1 bis 0,9:1.

Der volumengewichtete mittlere Partikeldurchmesser $\overline{X}_{Fe\,max}$ der Komponente A) beträgt in der Regel 0,5 bis 100 mm, bevorzugt 1 bis 50 mm, besonders bevorzugt 2 bis 30 mm, ganz besonders bevorzugt 3 bis 20 mm.

Der volumengewichtete mittlere Partikeldurchmesser $\overline{X}_{Fe\,max}$ wird mittels digitaler Bildanalyse bestimmt. Beispielsweise kann ein Gerät der Reihe Camsizer® der Firma Retsch Technology verwendet werden. Dabei wird von jedem einzelnen Lignocellulosestreifen (Strand) oder jedem einzelnen Lignocellulosespan einer representativen Probe $X_{Femax}$ bestimmt. $X_{Femax}$ ist der größte Feret-Durchmesse eines Partikels (ermittelt aus verschiedenen Messrichtungen). Aus den Einzelwerten wird der volumengewichtete Mittelwert $\overline{X}_{Fe\,max}$ gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).

Setzt man Mischungen aus Holzspänen und anderen Lignocellulosepartikeln ein, z.B. Mischungen aus Holzspänen und Holzfasern, oder aus Holzspänen und Holzstaub, so beträgt der Anteil an Holzspänen der Komponente A) bzw. der Komponente G) in der Regel mindestens 50 Gew.-%, also 50 bis 100 Gew.-%, bevorzugt mindestens 75 Gew.-%, also 75 bis 100 Gew.-%, besonders bevorzugt mindestens 90 Gew.-%, also 90 bis 100 Gew.-%.

Die mittlere Dichten der Lignocellulosepartikel A) und G) liegen unabhängig voneinander in der Regel bei 0,4 bis 0,85 g/cm$^3$, bevorzugt bei 0,4 bis 0,75 g/cm$^3$, insbesondere bei 0,4 bis 0,6 g/cm$^3$. Diese Angaben beziehen sich auf die Normal-Rohdichte nach Lagerung im Normalklima (20°C, 65% Luftfeuchtigkeit).

Die Lignocellulosepartikel A) und G) können unabhängig voneinander die üblichen geringen Mengen Wasser von 0 bis 10 Gew.-%, bevorzugt 0,5 bis 8 Gew.-%, besonders bevorzugt 1 bis 5 Gew.-% (in einer üblichen geringen Schwankungsbreite von 0 bis 0,5 Gew.-%, bevorzugt 0 bis 0,4 Gew.-%, besonders bevorzugt 0 bis 0,3 Gew.-%) enthalten. Diese Mengenangabe bezieht sich auf 100 Gew.-% absolut trockene Holzsubstanz und beschreibt den Wassergehalt der Lignocellulosepartikel A) bzw. G) nach dem Trocknen (nach der oben beschriebenen Darrmethode) unmittelbar vor dem Mischen mit den anderen Komponenten.

In einer weiteren bevorzugten Ausführungsform werden für die Deckschichten Lignocellulosefasern als Lignocellulosepartikel G) und für den Kern Lignocellulosestreifen (Strand) oder Lignocellulosespäne, besonders bevorzugt Lignocellulosespäne, insbesondere Lignocellulosespäne mit einem volumengewichteteten mittleren Partikeldurchmesser $\overline{X}_{Fe\,max}$ von 2 bis 30 mm als Lignocellulosepartikel A) verwendet.

Komponente B):

Als expandierte Kunststoffteilchen der Komponente B) eignen sich expandierte Kunststoffteilchen, bevorzugt expandierte thermoplastische Kunststoffteilchen mit einer Schüttdichte von 10 bis 150 kg/m$^3$, bevorzugt 30 bis 130 kg/m$^3$, besonders bevorzugt 35 bis 110 kg/m$^3$, insbesondere 40 bis 100 kg/m$^3$ (ermittelt durch Wiegen eines mit dem Schüttgut gefüllten definierten Volumens).

Expandierte Kunststoffteilchen der Komponente B) werden in der Regel in Form von Kugeln oder Perlen mit einem mittleren Durchmesser von 0,01 bis 50 mm, bevorzugt 0,25 bis 10 mm, besonders bevorzugt 0,4 bis 8,5 mm, insbesondere 0,4 bis 7 mm eingesetzt. In einer bevorzugten Ausführungsform weisen die Kugeln eine kleine Oberfläche pro Volumen auf, beispielsweise in Form eines sphärischen oder elliptischen Partikels und sind vorteilhaft geschlossenzellig. Die Offenzelligkeit nach DIN-ISO 4590 beträgt in der Regel nicht mehr als 30%, also 0 bis 30%, bevorzugt 1 bis 25%, besonders bevorzugt 5 bis 15%.

Geeignete Polymere, die den expandierbaren oder expandierten Kunststoffteilchen zugrunde liegen, sind in der Regel alle bekannten Polymere oder deren Gemische, vorzugsweise thermoplastische Polymere oder deren Gemische, die sich verschäumen lassen. Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, $C_2$- bis $C_{10}$-Olefinhomopolymere, $C_2$- bis $C_{10}$-Olefincopolymere und Polyester. Bevorzugt verwendet man zur Herstellung der genannten Olefinpolymere die 1-Alkene, zum Beispiel Ethylen, Propylen, 1-Buten, 1-Hexen, 1-Octen.

Des Weiteren können den Polymeren, vorzugsweise den Thermoplasten, die den expandierbaren oder expandierten Kunststoffteilchen der Komponente B) zugrunde liegen übliche Additive, zum Beispiel UV-Stabilisatoren, Antioxidantien, Beschichtungsmittel, Hydrophobierungsmittel, Keimbildner, Weichmacher, Flammschutzmittel, lösliche und unlösliche anorganische und/oder organische Farbstoffe.

Die Komponente B) kann üblicherweise wie folgt erhalten werden:

Geeignete Polymere können mit einem ausdehnungsfähiges Medium (auch "Treibmittel" genannt) oder enthaltend ein ausdehnungsfähiges Medium durch Einwirkung von Mikrowellen-, Wärmenergie, Heißluft, vorzugsweise Dampf, und/oder Druckänderung expandiert (oft auch als "aufgeschäumt" bezeichnet) (Kunststoff Handbuch 1996, Band 4 "Polystyrol" , Hanser 1996, Seiten 640 bis 673 oder US-A-5,112,875) werden. Hierbei dehnt sich in der Regel das Treibmittel aus, die Partikel nehmen an Größe zu und Zellstrukturen entstehen. Dieses Expandieren kann in üblichen Aufschäumvorrichtungen, oft als "Vorschäumer" bezeichnet, durchgeführt werden. Derartige Vorschäumer können ortsfest installiert oder aber mobil sein. Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert. In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert. Die oben genannten kompakten Kunststoffteilchen, hierin auch "expandierbare Kunststoffteilchen" genannt, enthalten, im Gegensatz zu den expandierten Kunststoffteilchen, in der Regel keine Zellstrukturen. Die expandierten Kunststoffteilchen haben in der Regel nur noch einen geringen Gehalt an Treibmittel von 0 bis 5 Gew.-%, bevorzugt 0,5 bis 4 Gew.-%, besonders bevorzugt 1 bis 3 Gew.-% bezogen auf die Gesamtmasse Kunststoff und Treibmittel. Die so erhaltenen expandierten Kunststoffteilchen können zwischengelagert werden oder ohne weitere Zwischenschritte zur Herstellung der erfindungsgemäßen Komponente B weiterverwendet werden. Zum Expandieren der expandierbaren Kunststoffteilchen können alle dem Fachmann bekannten Treibmittel verwendet werden, beispielsweise aliphatische $C_3$- bis $C_{10}$-Kohlenwasserstoffe, wie Propan, n-Butan, Isobutan, n-Pentan, Isopentan, Neopentan cyclo-Pentan und/oder Hexan und dessen Isomere, Alkohole, Ketone, Ester, Ether oder halogenierte Kohlenwasserstoffe, bevorzugt n-Pentan, Isopentan, Neopentan und Cyclopentan, besonders bevorzugt ein handelsübliches Pentanisomerengemisch aus n-Pentan und iso-Pentan.

Der Gehalt an Treibmittel in den expandierbaren Kunststoffteilchen liegt im allgemeinen im Bereich von 0,01 bis 7 Gew.-%, vorzugsweise 0,6 bis 5 Gew.-%, besonders bevorzugt 1,1 bis 4 Gew.-%, jeweils bezogen auf die treibmittelhaltigen expandierbaren Kunststoffteilchen.

In einer bevorzugten Ausführungsform verwendet man Styrolhomopolymerisat (hierin auch einfach "Polystyrol" genannt), Styrolcopolymerisat oder deren Mischungen als einzigen Kunststoff in der Komponente B).

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation kann Styrol, gegebenenfalls unter Zusatz weiterer Comonomere in wässriger Suspension in Gegenwart eines üblichen Suspensionsstabilisators mittels radikalbildender Katalysatoren polymerisiert werden. Das Treibmittel und gegebenenfalls weitere übliche Zusatzstoffe können dabei bei der Polymerisation mit vorgelegt, im Laufe der Polymerisation oder nach beendeter Polymerisation dem Ansatz zugefügt werden. Die erhaltenen perlförmigen, mit Treibmittel imprägnierten, expandierbaren Styrolpolymerisate können nach beendeter Polymerisation von der wässrigen Phase abgetrennt, gewaschen, getrocknet und gesiebt werden.

Bei dem Extrusionsverfahren kann das Treibmittel beispielsweise über einen Extruder in das Polymer eingemischt, durch eine Düsenplatte gefördert und unter Druck zu Partikeln oder Strängen granuliert werden.

Die oben beschriebenen bevorzugten oder besonders bevorzugten expandierbaren Styrolpolymerisaten oder expandierbaren Styrolcopolymerisate haben einen relativ geringen Gehalt an Treibmittel. Derartige Polymerisate werden auch als "treibmittelarm" bezeichnet. Ein gut geeignetes Verfahren zu Herstellung von treibmittelarmen expandierbarem Polystyrol oder expandierbarem Styrolcopolymerisat wird in US-A-5,112,875 beschrieben, auf das hierin ausdrücklich Bezug genommen wird.

Wie beschrieben können auch Styrolcopolymerisate eingesetzt werden. Vorteilhaft weisen diese Styrolcopolymerisate mindestens 50 Gew.-%, also 50 bis 100 Gew.-%, vorzugsweise mindestens 80 Gew.-%, also 80 bis 100 Gew.-%, einpolymerisiertes Styrol bezogen auf die Masse des Kunststoffes (ohne Treibmittel) auf. Als Comonomere kommen z.B. $\alpha$-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d.h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis 0,5 Mol-%, bezogen auf Styrol, verwendet. Auch Mischungen verschiedener Styrol(co)polymerisate können verwendet werden. Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpolystyrol (A-IPS), Styrol-α-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Bevorzugt werden Kunststoffteilchen, besonders bevorzugt Styrolpolymerisate oder Styrolcopolymerisate, insbesondere Styrolhomopolymerisate mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt. Diese expandierten Polystyrolteilchen oder expandierte Styrolcopolymerteilchen können ohne oder mit weiteren Maßnahmen zur Treibmittelverminderung zur Herstellung des lignocellulosehaltigen Stoffs weiterverwendet werden.

Üblicherweise weist das expandierbare Polystyrol oder expandierbare Styrolcopolymerisat oder das expandierte Polystyrol oder expandierte Styrolcopolymerisat eine antistatische Beschichtung auf.

Die expandierten Kunststoffteilchen der Komponente B) liegen in der Regel auch nach dem Verpressen zum Lignocellulosewerkstoff, in ungeschmolzenem Zustand vor, das bedeutet, dass die Kunststoffteilchen der Komponente B) in der Regel nicht in die Lignocelluloseteilchen eingedrungen sind oder diese imprägniert haben, sondern zwischen den Lignocelluloseteilchen verteilt sind. Üblicherweise lassen sich die Kunststoffteilchen der Komponente B) mit physikalischen Verfahren, zum Beispiel nach dem Zerkleinern des Lignocellulosewerkstoffs, von der Lignocellulose abtrennen.

Die Gesamtmenge der expandierten Kunststoffteilchen der Komponente B), bezogen auf Trockenmasse der Lignocellulosepartikel A) liegt in der Regel im Bereich von 0 bis 25 Gew.-%, vorzugsweise 0 bis 20 Gew.-%, besonders bevorzugt 0 bis 10 Gew.-%, insbesondere 0 Gew.-%.

Komponente C) und H)

Die Bindemittel der Komponente C) bzw. der Komponente H) können ausgewählt werden aus der Gruppe bestehend aus Aminoplastharz und organischem Isocyanat mit mindestens zwei Isocyanatgruppen, wobei gleiche oder unterschiedliche Bindemittel bzw. Bindemittelmischungen der Komponenten C) bzw. H), bevorzugt gleiche, besonders bevorzugt in beiden Fällen Aminoplastharz, verwendet werden. Die Gewichtsangabe bezieht sich bei Aminoplastharzen auf den Feststoffgehalt der entsprechenden Komponente (bestimmt durch Verdunsten des Wassers bei 120°C, innerhalb von 2h nach Günter Zeppenfeld, Dirk Grunwald, Klebstoffe in der Holz- und Möbelindustrie, 2. Auflage, DRW-Verlag, Seite 268) und im Hinblick auf das Isocyanat, insbesondere das PMDI (Polymeres Diphenylmethandiisocyanat), auf die Isocyanatkomponente an sich, also zum Beispiel ohne Lösungsmittel oder Emulgiermedium.

Als Aminoplastharz können alle dem Fachmann, vorzugsweise die für die Herstellung von Holzwerkstoffen bekannten Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben. Es sind in der Regel Polykondensationsprodukte aus Verbindungen mit mindestens einer, gegebenenfalls teilweise mit organischen Resten substituierten, Aminogruppe oder Carbamidgruppe (die Carbamidgruppe wird auch Carboxamidgruppe genannt), bevorzugt Carbamidgruppe, bevorzugt Harnstoff oder Melamin, und einem Aldehyd, vorzugsweise Formaldehyd. Bevorzugte Polykondensationsprodukte sind Harnstoff-Formaldehydharze (UF-Harze), Melamin-Formaldehydharze (MF-Harze) oder melaminhaltige Harnstoff-Formaldehydharze (MUF-Harze), besonders bevorzugte Harnstoff-Formaldehydharze, beispielsweise Kaurit® Leim-Typen der Firma BASF SE.

Als organische Isocyanate eignen sich organische Isocyanate mit mindestens zwei Isocyanatgruppen oder deren Gemische, insbesondere alle dem Fachmann, vorzugsweise die für die Herstellung von Holzwerkstoffen oder Polyurethanen bekannten organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische. Die Isocyanate können entweder aliphatisch, cycloaliphatisch oder aromatisch sein. Besonders bevorzugt ist das organische Isocyanat MDI (Methylendiphenyldiisocyanat), das oligomere organische Isocyanat PMDI (Polymeres Methylendiphenylendiisocyanat), die erhältlich sind durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), oder Mischungen aus MDI und PMDI. Ganz besonders bevorzugt sind Produkte der LUPRANAT®-Typenreihe der BASF SE, insbesondere LUPRANAT® M 20 FB der BASF SE.

Das organische Isocyanat kann auch ein Isocyanat-terminiertes Prepolymer sein, das das Reaktionsprodukt eines Isocyanats, z.B. PMDI, mit einem oder mehreren Polyolen und/oder Polyaminen ist.

Es können Polyole verwendet werden, die aus der Gruppe Ethylenglykol, Diethylenglykol, Propylenglykol, Dipropylenglykol, Butandiol, Glycerin, Trimethylolpropan, Triethanolamin, Pentaerythrit, Sorbitol und Mischungen daraus, ausgewählt sind. Andere geeignete Polyole sind Biopolyole, wie Polyole aus Sojaöl, Rapsöl, Rizinusöl und Sonnenblumenöl. Geeignet sind auch Polyetherpolyole, die durch Polymerisierung von cyclischen Oxiden, wie zum Beispiel Ethylenoxid, Propylenoxid, Butylenoxid oder Tetrahydrofuran in der Gegenwart polyfunktioneller Initiatoren erhalten werden können. Geeignete Initiatoren enthalten aktive Wasserstoffatome und können Wasser, Butandiol, Ethylenglykol, Propylenglykol, Diethylenglykol, Triethylenglykol, Dipropylenglykol, Ethanolamin, Diethanolamin, Triethanolamin, Toluoldiamin, Diethyltoluoldiamin, Phenyldiamin, Diphenylmethandiamin, Ethylendiamin, Cyclohexandiamin, Cylcohexandimethanol, Resorcinol, Bisphenol A, Glycerin, Trimethylolpropan, 1,2,6-Hexantriol, Pentaerythrit, oder Gemische davon sein. Andere geeignete Polyetherpolyole umfassen Diole und Triole, wie beispielsweise Polyoxypropylendiole und -triole und Poly(oxyethylen-oxypropylen)diole und - triole, die durch gleichzeitige oder nacheinander erfolgende Additionsreaktionen von Ethylen- und Propylenoxiden mit di- oder trifunktionellen Initiatoren hergestellt werden. Geeignet sind auch Polyesterpolyole wie hydroxyterminierte Reaktionsprodukte von Polyolen, wie sie oben bereits beschrieben wurden, mit Polycarbonsäuren oder Polycarbonsäurederivaten, z. B. deren Anhydride, insbesondere Dicarbonsäuren oder Dicarbonsäurederivaten, beispielsweise Bernsteinsäure, Bernsteinsäuredimethylester, Glutarsäure, Glutarsäuredimethylester, Adipinsäure, Adipinsäuredimethylester, Sebacinsäure, Phthalsäureanhydrid, Tetrachlorophtalsäureanhydrid oder Dimethylterephthalat, oder Mischungen daraus.

Es können Polyamine verwendet werden, die aus der Gruppe Ethylendiamin, Toluoldiamin, Diaminodiphenylmethan, Polymethylenpolyphenylpolyamine, Aminoalkohole und Mischungen daraus, ausgewählt sind. Beispiele für Aminoalkohole sind Ethanolamin und Diethanolamin.

Das organische Isocyanat oder das Isocyanat-terminierte Prepolymer kann auch in Form einer wässrigen Emulsion verwendet werden, die beispielsweise durch Mischen mit Wasser in Gegenwart eines Emulgators hergestellt wird. Das organische Isocyanat bzw. die Isocyanatkomponente des Prepolymers können auch modifizierte Isocyanate sein, wie Carbodiimide, Allophanate, Isocyanurate und Biurete.

Besonders bevorzugt sind Polykondensationsprodukte, bei denen das molare Verhältnis Aldehyd zur gegebenenfalls teilweise mit organischen Resten substituierten Amino-Gruppe bzw. Carbamidgruppe im Bereich von 0,3:1 bis 1:1, bevorzugt 0,3:1 bis 0,6:1, besonders bevorzugt 0,3:1 bis 0,55:1, ganz besonders bevorzugt 0,3:1 bis 0,5:1 liegt. Werden die Aminoplaste in Kombination mit Isocyanaten eingesetzt, liegt das molare Verhältnis Aldehyd zur gegebenenfalls teilweise mit organischen Resten substituierten Amino-Gruppe bzw. Carbamidgruppe im Bereich von 0,3:1 bis 1:1, bevorzugt 0,3:1 bis 0,6:1, besonders bevorzugt 0,3:1 bis 0,45:1, ganz besonders bevorzugt 0,3:1 bis 0,4:1.

Die genannten Aminoplastharze werden üblicherweise in flüssiger Form, üblicherweise als 25 bis 90 gew.-%ige, vorzugsweise als 50 bis 70 gew.-%ige Lösung, vorzugsweise in wässriger Lösung eingesetzt, können aber auch als Feststoff eingesetzt werden.

Der Feststoffgehalt des flüssigen wässrigen Aminoplast-Harzes kann nach Günter Zeppenfeld, Dirk Grunwald, Klebstoffe in der Holz- und Möbelindustrie, 2. Auflage, DRW-Verlag, Seite 268 bestimmt werden.

Die Bestandteile des Bindemittels der Komponente C) und des Bindemittels der Komponente H) können für sich alleine eingesetzt werden, also zum Beispiel Aminoplastharz oder organisches Isocyanat als einziger Bestandteil des Bindemittels der Komponente C) oder des Bindemittels der Komponente H). Die Harzbestandteile des Bindemittels der Komponente C) bzw. des Bindemittels der Komponente H) können aber auch als Kombination zweier oder mehrerer Bestandteile des Bindemittels der Komponente C) bzw. des Bindemittels der Komponente H) eingesetzt werden. In einer bevorzugten Ausführungsform wird für den Kern als Komponente C) und für die Deckschichten als Komponente H) jeweils ein Aminoplastharz oder eine Kombination mehrerer Aminoplastharze eingesetzt. In einer besonders bevorzugten Ausführungsform wird für den Kern als Komponente C) eine Kombination aus einem oder mehrerer Aminoplastharze und Isocyanat und für die Deckschichten als Komponente H) ein Aminoplastharz oder eine Kombination mehrerer Aminoplastharze eingesetzt.

Die Gesamtmenge des Bindemittels der Komponente C), bezogen auf die Trockenmasse der Lingocellulosepartikel A) in der Mischung für den Kern liegt im Bereich von 1 bis 15 Gew.-%, vorzugsweise 2 bis 12 Gew.-%, besonders bevorzugt 3 bis 10 Gew.-%.

Werden die Bestandteile des Bindemittels der Komponente C) nur aus Gruppe der Aminopastharze ausgewählt, liegt die Gesamtmenge des Bindemittels der Komponente C) bezogen auf die Trockenmasse der Lignocellulosepartikel A) in der Mischung für den Kern im Bereich von 5 bis 15 Gew.-%, vorzugsweise 6 bis 12 Gew.-%, besonders bevorzugt 7 bis 10 Gew.-%.

Werden die Bestandteile des Bindemittels der Komponente C) nur aus Gruppe der Isocyanate ausgewählt liegt die Gesamtmenge des Bindemittels der Komponente C) bezogen auf die Trockenmasse der Lingocellulosepartikel A) in der Mischung für den Kern im Bereich von 1 bis 6 Gew.-%, vorzugsweise 2 bis 5 Gew.-%, besonders bevorzugt 3 bis 4 Gew.-%.

Werden die Bestandteile des Bindemittels der Komponente C) aus Gruppe der Aminopastharze und aus der Gruppe der Isocyanate ausgewählt (also Kombinationen aus Aminoplastharz und Isocyanat eingesetzt), liegt die Gesamtmenge des Bindemittels der Komponente C) bezogen auf die Trockenmasse der Lingocellulosepartikel A) in der Mischung für den Kern im Bereich von 4 bis 15 Gew.-%, vorzugsweise 5 bis 12 Gew.-%, besonders bevorzugt 6 bis 10 Gew.-%. Für diesen Fall liegt die Gesamtmenge des Isocyanats im Bindemittel der Komponente C) bezogen auf die Trockenmasse der Lignocellulosepartikel A) im Bereich von 0,05 bis 3,5 Gew.-%, vorzugsweise 0,1 bis 2 Gew.-%, besonders bevorzugt 0,3 bis 1 Gew.-%.

Die Gesamtmenge des Bindemittels der Komponente H), bezogen auf die Trockenmasse der Lignocellulosepartikel G) in der/den Mischung(en) für die Deckschicht(en) liegt im Bereich von 1 bis 15 Gew.-%, vorzugsweise 2 bis 14 Gew.-%, besonders bevorzugt 3 bis 12 Gew.-%.

Werden die Bestandteile des Bindemittels der Komponente H) nur aus Gruppe der Aminopastharze ausgewählt, liegt die Gesamtmenge des Bindemittels der Komponente H) bezogen auf die Trockenmasse der Lingocellulosepartikel G) in der/den Mischung(en) für die Deckschicht(en) im Bereich von 6 bis 15 Gew.-%, vorzugsweise 7 bis 14 Gew.-%, besonders bevorzugt 8 bis 12 Gew.-%.

Werden die Bestandteile des Bindemittels der Komponente H) nur aus Gruppe der Isocyanate ausgewählt liegt die Gesamtmenge des Bindemittels der Komponente H) bezogen auf die Trockenmasse der Lingocellulosepartikel G) in der/den Mischung(en) für die Deckschicht(en) im Bereich von 1 bis 6 Gew.-%, vorzugsweise 2 bis 5 Gew.-%, besonders bevorzugt 3 bis 4 Gew.-%.

Werden die Bestandteile des Bindemittels der Komponente H) aus Gruppe der Aminopastharze und aus der Gruppe der Isocyanate ausgewählt (also Kombinationen aus Aminoplastharz und Isocyanat eingesetzt), liegt die Gesamtmenge des Bindemittels der Komponente H) bezogen auf die Trockenmasse der Lingocellulosepartikel G) in der/den Mischung(en) für die Deckschicht(en) im Bereich von 5 bis 15 Gew.-%, vorzugsweise 6 bis 14 Gew.-%, besonders bevorzugt 7 bis 12 Gew.-%. Für diesen Fall liegt die Gesamtmenge des Isocyanats im Bindemittel der Komponente H) bezogen auf die Trockenmasse der Lignocellulosepartikel G) im Bereich von 0,05 bis 3,5 Gew.-%, vorzugsweise 0,1 bis 2 Gew.-%, besonders bevorzugt 0,3 bis 1 Gew.-%.

Komponente D) und I)

Als Komponenten D) und I) werden jeweils unabhängig voneinander unterschiedliche oder gleiche, bevorzugt gleiche, dem Fachmann bekannte Ammoniumsalze oder deren Gemische eingesetzt. Bevorzugt werden diese Ammoniumsalze dem Bindemittel Komponente C) bzw. der Komponente H) zugesetzt, bevor sie mit den Lignocellulosepartikel A) bzw. G) in Kontakt gebracht werden.

Geeignete Ammoniumsalze sind beispielsweise Ammoniumchlorid, Ammoniumhydrogensulfat, Ammoniumsulfat oder Ammoniumnitrat. Bevorzugt werden Ammoniumsulfat oder Ammoniumnitrat, besonders bevorzugt Ammoniumnitrat eingesetzt.

Komponente E) und J)

Die Komponenten E) bzw. J) können weitere handelsübliche und dem Fachmann bekannte Additive als Komponente E) bzw. Komponente J) unabhängig voneinander gleiche oder verschiedene, bevorzugt gleiche Additive in Mengen von 0 bis 5 Gew.-%, bevorzugt 0 bis 3 Gew.-%, besonders bevorzugt 0 bis 1,5 Gew.-% enthalten, mit der Maßgabe, dass diese Komponenten keine der Bedeutungen einer der anderen Komponenten A), B), C), D), F), G), H), I) oder K) haben, z.B. Hydrophobierungsmittel wie Paraffin-Emulsionen, zusätzliche Härter, Pigmente, zum Beispiel Ruß, Pilzschutzmittel, Formaldehydfänger, zum Beispiel Harnstoff oder Polyamine.

Unter zusätzlichen Härtern (also Härter die zusätzlich zu den Ammoniumsalzen der Komponenten D) und I) eingesetzt werden) sind hierin alle chemischen Verbindungen jeglichen Molekulargewichts zu verstehen, welche die Polykondensation von Aminoplastharz bewirken oder beschleunigen. Eine gut geeignete Gruppe der zusätzlichen Härter für Aminoplastharz sind organische und anorganische Säuren, zum Beispiel Schwefelsäure, Ameisensäure, Maleinsäure oder säureregenerierende Substanzen, wie Aluminiumchlorid, Aluminiumsulfat oder deren Gemische. Werden zusätzliche Härter eingesetzt, so ist der Gewichtsanteil in Gew.-% bezogen auf die Lignocellulosepartikel A) bzw. G) im Kern größer als in den Deckschichten.

Komponente F) und K)

Die Komponente F) und die Komponente K) können unabhängig voneinander ausgewählt werden aus der Gruppe der Alkali- oder Erdalkalisalze aus der Gruppe der Sulfate, Nitrate, Halogenide oder deren Gemische. Die erfindungsgemäßen mehrschichtigen Lignocellulosewerkstoffe enthalten im Kern 0,1 bis 3 Gew.-%, bevorzugt 0,2 bis 2,5 Gew.-%, besonders bevorzugt 0,25 bis 2 Gew.-%, Alkali- oder Erdalkalisalze aus der Gruppe der Sulfate, Nitrate, Halogenide oder deren Gemische als Komponente F) und in den Deckschichten 0 bis 2 Gew.-%, bevorzugt 0 bis 0,15 Gew.-%, besonders bevorzugt 0 bis 0,05 Gew.-% als Komponente K). Ganz besonders bevorzugt werden den Mischungen für die Deckschichten keine Alkali- oder Erdalkalisalze aus der Gruppe der Sulfate, Nitrate, Halogenide oder deren Gemische zugesetzt.

Als Alkali- oder Erdalkalisalze aus der Gruppe der Sulfate, Nitrateoder Halogenide eignen sich beispielsweise Lithiumsulfat, Lithiumhydrogensulfat, Lithiumnitrat, Lithiumchlorid, Lithiumbromid, Natriumsulfat, Natriumhydrogensulfat, Natriumnitrat, Natriumchlorid, Natriumbromid, Kaliumsulfat, Kaliumhydrogensulfat, Kaliumnitrat, Kaliumchlorid, Kaliumbromid, Magnesiumsulfat, Magnesiumhydrogensulfat, Magnesiumnitrat, Magnesiumchlorid, Magnesiumbromid, Calciumsulfat, Calciumhydrogensulfat, Calciumnitrat, Calciumchlorid, Calciumbromid oder deren Gemische, bevorzugt Lithiumsulfat, Lithiumnitrat, Lithiumchlorid, Natriumsulfat, Natriumnitrat, Natriumchlorid, Kaliumsulfat, Kaliumnitrat, Kaliumchlorid oder deren Gemische, besonders bevorzugt Lithiumsulfat, Lithiumnitrat, Natriumsulfat, Natriumnitrat, Kaliumsulfat, Kaliumnitrat oder deren Gemische, insbesondere Natriumsulfat, Natriumnitrat oder deren Gemische, ganz besonders bevorzugt Natriumnitrat.

Die Alkali- oder Erdalkalisalze aus der Gruppe der Sulfate, Nitrate,oder Halogenide werden in der Regel als Lösung oder Pulver, bevorzugt als Lösung eingesetzt. In einer weiteren besonderen Ausführungsform werden die Salze mit dem Bindemittel, wenn es sich bei dem Bindemittel um ein wässriges Bindemittel handelt, z.B. Aminoplastharz, gemischt. Das kann entweder durch Zugabe von Salzlösung oder als Feststoff, z.B. in Form von Salzpulver oder Salzgranulat, besonders bevorzugt als Feststoff, und anschließendem Mischen erfolgen.

Verwendung:

Die Gesamtdicke der erfindungsgemäßen mehrschichtigen Lignocellulosewerkstoffe variiert mit dem Anwendungsgebiet und liegt in der Regel im Bereich von 0,5 bis 100 mm, vorzugsweise im Bereich von 10 bis 40 mm, insbesondere 15 bis 20 mm.

Die erfindungsgemäßen mehrschichtigen Lignocellulosewerkstoffe haben in der Regel eine mittlere Gesamtdichte von 300 bis 700 kg/m$^3$, bevorzugt 325 bis 590 kg/m$^3$, besonders bevorzugt 350 bis 570 kg/m$^3$, insbesondere 400 bis 550 kg/m$^3$. Die Dichte wird 24 h Stunden nach Herstellung gemäß EN 1058 bestimmt.

Die erfindungsgemäßen mehrschichtigen Lignocellulosewerkstoffe weisen in der Regel eine inhomogene Dichteverteilung senkrecht zur Plattenebene auf. In den Deckschichten ist die Dichte vorteilhaft höher als im Kern. Das Dichteprofil einer Platte lässt sich über die Absorption eingestrahlter Röntgenstrahlung, beispielsweise mit dem Dichteprofilmessgerät DAX 5000 der Firma Grecon, bestimmen. Die Differenz zwischen Dichtemaximum in den Deckschichten und Dichteminimum im Kern beträgt mindestens 50 kg/m$^3$, bevorzugt 50 bis 600 kg/m$^3$, besonders bevorzugt 200 bis 600 kg/m$^3$, insbesondere 300 bis 600 kg/m$^3$.

Die nach dem erfindungsgemäßen Verfahren hergestellten Lignocellulose-Werkstoffe, insbesondere dreischichtige Spanplatten, werden vor allem im Bau, im Innenausbau, im Laden- und Messebau, als Material für Möbel und als Verpackungsmaterial verwendet.

Im Bau, Innenausbau und Laden- und Messebau werden die erfindungsgemäß hergestellten Lignocellulose-Werkstoffe beispielsweise als Dach- und Wandbeplankungen, Ausfachungen, Verschalungen, Fußböden, Türeninnenlagen, Trennwände oder Regalböden verwendet.

Im Möbelbau werden die nach dem erfindungsgemäß hergestellten Lignocellulose-Werkstoffe beispielsweise als Trägermaterial für Kastenmöbel, als Regalboden, als Türenmaterial, als Arbeitsplatte, als Küchenfront, als Decklagen in Sandwichkonstruktionen, als Elemente in Tischen, Stühlen und Polstermöbel eingesetzt.

Beispiele

Materialmischung 1

402 g Kaurit® Leim 347 (BASF SE) wurden mit 50,1 g HydroWax® 140 (Sasol) und 72,0 g Wasser unter Rühren gemischt. Diese Mischung wurde in einem Schaufelmischer zu 3123 g Fichtenspänen gegeben und gemischt.

Materialmischung 2

402 g Kaurit® Leim 347 (BASF SE) wurden mit 20,1 g Natriumnitrat, 20,4 g 40%iger Ammoniumnitratlösung, 50,1 g HydroWax® 140 (Sasol) und 65,4 g Wasser unter Rühren gemischt. Diese Mischung wurde in einem Schaufelmischer zu 3123 g Fichtenspänen gegeben und gemischt.

Bestimmung des dielektrischen Verlustes

Von beiden Mischungen wurde der dielektrische Verlust bestimmt. Dazu wurde die jeweilige Mischung in eine Messkammer gefüllt, die aus einem äußeren Metallzylinder und einem inneren Metallzylinder besteht. Der Aufbau entspricht dem eines Zylinderkondensators, wobei die Grundflächen des äußeren und des inneren Zylinders in derselben Ebene liegen und die beiden zylindrischen Oberflächen (Innenseite des äußeren und Außenseite des inneren Zylinders) koaxial sind. Die zu prüfende Mischung wird in den ringförmigen Zwischenraum gefüllt, der zwischen dem äußeren (Durchmesser der Innenseite 9,5 cm) und dem inneren Metallzylinder (Durchmesser 5 cm) liegt. Die Höhe der Füllung beträgt 11,9 cm. An den Zylinderkondensator wird ein elektrisches Wechselfeld angelegt und die dielektrische Antwort bei unterschiedlichen Frequenzen (1 kHz, 10 kHz, 100 kHz, 1 MHz, 10 MHz) durch Messen des durch die Materialmischung fließenden Stroms bestimmt. Dazu wurde ein Impedanzanalysator von Hewlett-Packard des Typs HP 4192A LF verwendet. Durch Extrapolation wurde für beide Mischungen der dielektrische Verlust $\varepsilon''$ bei 27,12 MHz bestimmt.
$\varepsilon''$ (Mischung 1) = 0,0134
$\varepsilon''$ (Mischung 2) = 0,0230

Erfindungsgemäße Spanplatte

In einen Streurahmen wurde eine Matte aus 3 Schichten gestreut. Die unterste Schicht (Deckschicht) aus Mischung 1, die mittlere Schicht (Kern) aus Mischung 2 und die obere Schicht (Deckschicht) aus Mischung 1 im Verhältnis 33 : 34 : 33 (Gesamtgewicht der Matte 2893 g) Die gestreute Matte wurde in einer Oberkolbenpresse bei Raumtemperatur für 60 Sekunden bei einem spezifischen Pressdruck von 10 bar im Streurahmen vorverdichtet. Dabei wurde mit Matte von 125 mm (Höhe nach dem Streuen) auf 60 mm verdichtet. Anschließend wurde der Streurahmen entfernt. Zur Überwachung des Temperaturverlaufs in der Plattenmitte und in der Mitte der Deckschichten wurden optische Sensoren jeweils in ein horizontales Loch im Mittelpunkt der Deckschichten und des Kerns in die Schmalfläche der Matte eingeführt. Anschließend wurde die Matte mit Trennvliesen auf Ober- und Unterseite versehen und in der Presse HLOP 170 der Firma Hoefer Presstechnik GmbH innerhalb von 2 s auf 20 mm verdichtet und anschließend durch Anlegen eines hochfrequenten Wechselfelds (27,12 MHz) erwärmt. Nach dem Erreichen einer Temperatur von 130 °C im Kern wurde die Presse geöffnet. Diese Öffnung erfolgte 105 Sekunden nach Anlegen des hochfrequenten Wechselfelds. Zu diesem Zeitpunkt betrug die Temperatur in den Deckschichten 118°C. Die Matte wurde mittels einer automatischen Übergabe in eine Heißpresse der Firma Höfer geschoben. Dort wurde bei einer Temperatur von 220°C auf 19 mm Dicke gepresst (Presszeit 152 s)
Die Querzugsfestigkeit der so hergestellten dreischichtigen Spanplatte gemäß EN 319 betrug 0,98 N/mm$^2$ bei einer gemessenen Dichte (EN 1058) von 675 kg/m$^3$.

Referenzspanplatte

In einen Streurahmen wurde eine Matte aus 3 Schichten gestreut. Die unterste Schicht (Deckschicht) aus Mischung 1, die mittlere Schicht (Kern) aus Mischung 1 und die obere Schicht (Deckschicht) aus Mischung 1 im Verhältnis 33 : 34 : 33 (Gesamtgewicht der Matte 2884 g)Die gestreute Matte wurde in einer Oberkolbenpresse bei Raumtemperatur für 60 Sekunden bei einem spezifischen Pressdruck von 10 bar im Streurahmen vorverdichtet. Dabei wurde mit Matte von 125 mm (Höhe nach dem Streuen) auf 60 mm verdichtet. Anschließend wurde der Streurahmen entfernt. Zur Überwachung des Temperaturverlaufs in der Plattenmitte und in der Mitte der Deckschichten wurden optische Sensoren jeweils in ein horizontales Loch im Mittelpunkt der Deckschichten und des Kerns in die Schmalfläche der Matte eingeführt. Anschließend wurde die Matte mit Trennvliesen auf Ober- und Unterseite versehen und in der Presse HLOP 170 der Firma Hoefer Presstechnik GmbH innerhalb von 2 s auf 20 mm verdichtet und anschließend durch Anlegen eines hochfrequenten Wechselfelds (27,12 MHz) erwärmt. Nach 105 Sekunden wurde die Presse geöffnet. Zu diesem Zeitpunkt betrug die Temperatur im Kern und in den Deckschichten 130°C. Die Matte wurde mittels einer automatischen Übergabe in eine Heißpresse der Firma Höfer geschoben. Dort wurde bei einer Temperatur von 220°C auf 19 mm Dicke gepresst (Presszeit 152 s).
Die Querzugsfestigkeit der so hergestellten dreischichtigen Spanplatte gemäß EN 319 betrug 0,81 N/mm$^2$ bei einer gemessenen Dichte (EN 1058) von 668 kg/m$^3$.

**Patentansprüche**

1. Verfahren zur diskontinuierlichen oder kontinuierlichen Herstellung von mehrschichtigen Lignocellulosewerkstoffen mit einem Kern und mindestens einer oberen und einer unteren Deckschicht, enthaltend die Verfahrensschritte

   a) Mischen der Komponenten der einzelnen Schichten getrennt voneinander,
   b) Schichtweises Streuen der Mischungen für die Kernschicht und für die Deckschichten zu einer Matte,
   c) Vorverdichtung nach dem Streuen der einzelnen Schichten,
   d) Anlegen eines hochfrequenten elektrischen Feldes vor, während und/oder nach der Vorverdichtung und anschließendes
   e) Heißpressen,

   wobei man im Verfahrensschritt a) für den Kern die Lignocellulosepartikel A) [Komponente A)] mit

   B) 0 bis 25 Gew.-% expandierte Kunststoffteilchen mit der Schüttdichte im Bereich von 10 bis 150 kg/m$^3$ [Komponente B)],
   C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
   D) 0 bis 3 Gew.-% Ammoniumsalze [Komponente D)],
   E) 0 bis 5 Gew.-% Additive [Komponente E)] und
   F) 0,1 bis 3 Gew.-% Alkali- oder Erdalkalisalze aus der Gruppe der Sulfate, Nitrate, Halogenide oder deren Gemische [Komponente F)],
   für die Deckschichten die Lignocellulosepartikel G) [Komponente G)] mit
   H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],
   I) 0 bis 2 Gew.-% Ammoniumsalze [Komponente I)],
   J) 0 bis 5 Gew.-% Additive [Komponente J)] und
   K) 0 bis 2 Gew.-% Alkali- oder Erdalkalisalze aus der Gruppe der Sulfate, Nitrate, Halogenide oder deren Gemische [Komponente K)]

   vermischt, wobei nach Verfahrensschritt a) die Mischung für den Kern bezogen auf das Gesamttrockengewicht der Mischung der Komponenten A) bis F) zwischen 3 und 15 Gew.-% Wasser, die Mischung(en) für die Deckschichten bezogen auf das Gesamttrockengewicht der Mischung(en) der Komponenten G) bis K) zwischen 5 und 20 Gew.-% Wasser enthalten, und die Bedingungen

$$\text{Komponente F)} \geq 1{,}1 \cdot \text{Komponente K)}$$

   und

$$[\text{Komponente F)} + \text{Komponente D)}] \geq 1{,}1 \cdot [\text{Komponente K)} + \text{Komponente I)}]$$

   erfüllt sind.

2. Verfahren zur Herstellung von mehrschichtigen Lignocellulosewerkstoffen nach Anspruch 1, **dadurch gekennzeichnet, dass** man das Verfahren kontinuierlich durchführt.

3. Verfahren zur Herstellung von mehrschichtigen Lignocellulosewerkstoffen nach einem der Ansprüche 1 oder 2, **dadurch gekennzeichnet, dass** die Bedingung

$$\text{Komponente F)} \geq 1{,}5 \cdot \text{Komponente K)}$$

   erfüllt ist.

4. Verfahren zur Herstellung von mehrschichtigen Lignocellulosewerkstoffen nach einem der Ansprüche 1 oder 2, **dadurch gekennzeichnet, dass** die Bedingung

$$[Komponente\ F) + Komponente\ D)] \geq 1{,}5 \cdot [Komponente\ K) + Komponente\ I)]$$

erfüllt ist.

**5.** Verfahren zur Herstellung von mehrschichtigen Lignocellulosewerkstoffen nach einem der Ansprüche 1 oder 2, **dadurch gekennzeichnet, dass** die Bedingungen

$$[Komponente\ F) + Komponente\ D)] \geq 1{,}5 \cdot [Komponente\ K) + Komponente\ I)]$$

und

$$Komponente\ F) \geq 1{,}5 \cdot Komponente\ K)$$

erfüllt sind.

**6.** Verfahren zur Herstellung von mehrschichtigen Lignocellulosewerkstoffen nach einem der Ansprüche 1 oder 2, **dadurch gekennzeichnet, dass** die Bedingungen

$$[Komponente\ F) + Komponente\ D)] \geq 5 \cdot [Komponente\ K) + Komponente\ I)]$$

und

$$Komponente\ F) \geq 5 \cdot Komponente\ K)$$

erfüllt sind.

**7.** Verfahren zur Herstellung von mehrschichtigen Lignocellulosewerkstoffen nach einem der Ansprüche 1 bis 6, **dadurch gekennzeichnet, dass** die Temperatur im Kern-B nach Verfahrensschritt d) höchstens 150°C beträgt.

**8.** Verfahren zur Herstellung von mehrschichtigen Lignocellulosewerkstoffen nach einem der Ansprüche 1 bis 6, **dadurch gekennzeichnet, dass** die Temperatur im Kern-B nach Verfahrensschritt d) mindestens 60°C beträgt.

**9.** Verfahren zur Herstellung von mehrschichtigen Lignocellulosewerkstoffen nach einem der Ansprüche 1 bis 6, **dadurch gekennzeichnet, dass** die Temperaturdifferenz zwischen dem Kern-B und den Deckschichten DS-A und DS-C nach Verfahrensschritt d) mindestens 5°C beträgt.

**10.** Verfahren zur Herstellung von mehrschichtigen Lignocellulosewerkstoffen nach einem der Ansprüche 1 bis 6, **dadurch gekennzeichnet, dass** die Temperaturdifferenz zwischen dem Kern-B und den Deckschichten DS-A und DS-C nach Verfahrensschritt d) höchstens 50°C beträgt.

**11.** Verfahren zur Herstellung von mehrschichtigen Lignocellulosewerkstoffen nach einem der Ansprüche 1 bis 10, **dadurch gekennzeichnet, dass** die mehrschichtigen Lignocellulosewerkstoffe im Kern 0,2 bis 2,5 Gew.-% Komponente F) enthält.

**12.** Verfahren zur Herstellung von mehrschichtigen Lignocellulosewerkstoffen nach einem der Ansprüche 1 bis 10, **dadurch gekennzeichnet, dass** die mehrschichtigen Lignocellulosewerkstoffe im Kern 0,25 bis 2 Gew.-% Komponente F) enthält.

**13.** Verfahren zur Herstellung von mehrschichtigen Lignocellulosewerkstoffen nach einem der Ansprüche 1 bis 12, **dadurch gekennzeichnet, dass** der Mischung der Komponenten G) bis J) keine Komponente K) zugesetzt wird.

**14.** Mehrschichtige Lignocellulosewerkstoffe, hergestellt durch ein Verfahren zur diskontinuierlichen oder kontinuierlichen, bevorzugt kontinuierlichen Herstellung von mehrschichtigen Lignocellulosewerkstoffen mit einem Kern und mindestens einer oberen und einer unteren Deckschicht, enthaltend die Verfahrensschritte

a) Mischen der Komponenten der einzelnen Schichten getrennt voneinander,
b) Schichtweises Streuen der Mischungen für die Kernschicht und für die Deckschichten zu einer Matte,
c) Vorverdichtung nach dem Streuen der einzelnen Schichten,
d) Anlegen eines hochfrequenten elektrischen Feldes vor, während und/oder nach der Vorverdichtung und anschließendes
e) Heißpressen,

wobei man im Verfahrensschritt a)
für den Kern die Lignocellulosepartikel A) [Komponente A)] mit

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],
für die Deckschichten die Lignocellulosepartikel G) [Komponente G)] mit
H) 1 bis 15 Gew.-% eines oder mehrerer Bindemittel ausgewählt aus der Gruppe bestehend aus Aminoplastharz, und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und
K) 0 bis 2 Gew.-% Alkali- oder Erdalkalisalze aus der Gruppe der Sulfate, Nitrate, Halogenide oder deren Gemische [Komponente K)]

vermischt, wobei nach Verfahrensschritt a) die Mischung für den Kern bezogen auf das Gesamttrockengewicht der Mischung der Komponenten A) bis F) zwischen 3 und 15 Gew.-% Wasser, die Mischung(en) für die Deckschichten bezogen auf das Gesamttrockengewicht der Mischung(en) der Komponenten G) bis K) zwischen 5 und 20 Gew.-% Wasser enthalten, und die Bedingungen

$$\text{Komponente F)} \geq 1{,}1 \cdot \text{Komponente K)}$$

und

$$[\text{Komponente F)} + \text{Komponente D)}] \geq 1{,}1 \cdot [\text{Komponente K)} + \text{Komponente I)}]$$

erfüllt sind.

15. Mehrschichtige Lignocellulosewerkstoffe, hergestellt nach Anspruch 1, wobei die mehrschichtigen Lignocellulosewerkstoffe im Kern 0,2 bis 2,5 Gew.-% Komponente F) enthält.

16. Mehrschichtige Lignocellulosewerkstoffe, hergestellt nach Anspruch 1, wobei die mehrschichtigen Lignocellulosewerkstoffe im Kern 0,25 bis 2 Gew.-% Komponente F) enthält.

17. Mehrschichtige Lignocellulosewerkstoffe nach Anspruch 14, **dadurch gekennzeichnet, dass** die mehrschichtigen Lignocellulosewerkstoffe im Kern 0,2 bis 2,5 Gew.-% Komponente F) enthält.

18. Mehrschichtige Lignocellulosewerkstoffe nach Anspruch 14 **dadurch gekennzeichnet, dass** die mehrschichtigen Lignocellulosewerkstoffe im Kern 0,25 bis 2 Gew.-% Komponente F) enthält.

19. Mehrschichtige Lignocellulosewerkstoffe mit einem Kern und mindestens einer oberen und einer unteren Deckschicht gemäß Anspruch 1, in denen der Kern bezogen auf die Lignocellulosepartikel

A) [Komponente A)] die Komponenten

B) 0 bis 25 Gew.-% expandierte Kunststoffteilchen mit der Schüttdichte im Bereich von 10 bis 150 kg/m$^3$ [Komponente B)],

C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],

D) 0 bis 3 Gew.-% Ammoniumsalze [Komponente D)],

E) 0 bis 5 Gew.-% Additive [Komponente E)] und

F) 0,1 bis 3 Gew.-% Alkali- oder Erdalkalisalze aus der Gruppe der Sulfate, Nitrate, Halogenide oder deren Gemische [Komponente F)],

enthält, und in denen die Deckschichten bezogen auf die Lignocellulosepartikel G) [Komponente G)] die Komponenten

H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],

I) 0 bis 2 Gew.-% Ammoniumsalze [Komponente I)],

J) 0 bis 5 Gew.-% Additive [Komponente J)] und

K) 0 bis 2 Gew.-% Alkali- oder Erdalkalisalze aus der Gruppe der Sulfate, Nitrate, Halogenide oder deren Gemische [Komponente K)]

enthalten, und die Bedingungen

$$\text{Komponente F)} \geq 1{,}1 \cdot \text{Komponente K)}$$

und

$$[\text{Komponente F)} + \text{Komponente D)}] \geq 1{,}1 \cdot [\text{Komponente K)} + \text{Komponente I)}]$$

erfüllt sind.

20. Mehrschichtige Lignocellulosewerkstoffe mit einem Kern und mindestens einer oberen und einer unteren Deckschicht nach einem der Ansprüche 14 bis 19, wobei diese eine Gesamtdicke von 0,5 bis 100 mm aufweisen.

21. Mehrschichtige Lignocellulosewerkstoffe mit einem Kern und mindestens einer oberen und einer unteren Deckschicht nach einem der Ansprüche 14 bis 20, wobei diese eine mittlere Dichte von 300 bis 700 kg/m$^3$ aufweisen.

22. Mehrschichtige Lignocellulosewerkstoff nach einem der Ansprüche 14 bis 21, **dadurch gekennzeichnet, dass** die Differenz zwischen Dichtemaximum in den Deckschichten und Dichteminimum im Kern mindestens 50 kg/m$^3$ beträgt.

23. Mehrschichtige Lignocellulosewerkstoff nach einem der Ansprüche 14 bis 22, **dadurch gekennzeichnet, dass** keine Komponenten K) in den Deckschichten DS-A und DS-C enthalten ist.

24. Mehrschichtige Lignocellulosewerkstoffe gemäß einem der Ansprüche 14 bis 23, erhältlich nach einem Verfahren gemäß einem der Ansprüche 1 bis 13.

25. Verwendung der mehrschichtigen Lignocellulosewerkstoffe gemäß einem der Ansprüche 14 bis 24 oder erhalten durch ein Verfahren gemäß einem der Ansprüche 1 bis 13 im Bau, im Innenausbau, im Laden- und Messebau, als Material für Möbel oder als Verpackungsmaterial.

26. Verwendung eines mehrschichtigen Lignocellulosewerkstoffes gemäß einem der Ansprüche 14 bis 24 oder erhalten durch ein Verfahren gemäß einem der Ansprüche 1 bis 13 als Dach- und Wandbeplankungen, Ausfachungen, Verschalungen, Fußböden, Türeninnenlagen, Trennwände, Regalböden oder als Trägermaterial für Kastenmöbel, als Regalboden, als Türenmaterial, als Arbeitsplatte, als Küchenfront, als Decklagen in Sandwichkonstruktionen, als Elemente in Tischen, Stühlen und Polstermöbel.

**Claims**

1. A process for the batchwise or continuous production of multilayer lignocellulose materials with a core and with at least one upper and one lower outer layer, comprising the following steps:

    a) mixing of the components of the individual layers separately from one another,
    b) layer-by-layer scattering of the mixtures for the core layer and for the outer layers to give a mat,
    c) precompaction after the scattering of the individual layers,
    d) application of a high-frequency electrical field before, during and/or after the precompaction, and then
    e) hot pressing,

    where, in step a),
    for the core, the lignocellulose particles A) [component A)] are mixed with

    B) from 0 to 25% by weight of expanded plastics particles with bulk density in the range from 10 to 150 kg/m$^3$ [component B)],
    C) from 1 to 15% by weight of one or more binders selected from the group consisting of aminoplastic resin and organic isocyanate having at least two isocyanate groups [component C)],
    D) from 0 to 3% by weight of ammonium salts [component D)],
    E) from 0 to 5% by weight of additives [component E)] and
    F) from 0.1 to 3% by weight of alkali metal salts or alkaline earth metal salts from the group of the sulfates, nitrates, halides and mixtures of these [component F)],
    and for the outer layers, the lignocellulose particles
    G) [component G)] are mixed with
    H) from 1 to 15% by weight of one or more binders selected from the group consisting of aminoplastic resin and organic isocyanate having at least two isocyanate groups [component H)],
    I) from 0 to 2% by weight of ammonium salts [component I)],
    J) from 0 to 5% by weight of additives [component J)] and
    K) from 0 to 2% by weight of alkali metal salts or alkaline earth metal salts from the group of the sulfates, nitrates, halides and mixtures of these [component K)],

    wherein, after step a), the mixture for the core comprises, based on the total dry weight of the mixture of components A) to F) from 3 to 15% by weight of water, the mixture(s) for the outer layers comprise(s), based on the total dry weight of the mixture (s) of components G) to K), from 5 to 20% by weight of water, and the following conditions are met:

    $$\text{component F)} \geq 1.1 \cdot \text{component K)}$$

    and

    $$[\text{component F)} + \text{component D)}] \geq 1.1 \cdot [\text{component K)} + \text{component I)}].$$

2. The process for the production of multilayer lignocellulose materials according to claim 1, wherein the process is carried out continuously.

3. The process for the production of multilayer lignocellulose materials according to claim 1 or 2, wherein the following condition is met:

    $$\text{component F)} \geq 1.5 \cdot \text{component K)}.$$

4. The process for the production of multilayer lignocellulose materials according to claim 1 or 2, wherein the following condition is met:

[component F) + component D)] ≥ 1.5 • [component K) + component I)].

5. The process for the production of multilayer lignocellulose materials according to claim 1 or 2, wherein the following conditions are met:

[component F) + component D)] ≥ 1.5 • [component K) + component I)]

and

component F) ≥ 1.5 • component K).

6. The process for the production of multilayer lignocellulose materials according to claim 1 or 2, wherein the following conditions are met:

[component F) + component D)] ≥ 5 • [component K) + component I)]

and

component F) ≥ 5 • component K).

7. The process for the production of multilayer lignocellulose materials according to any of claims 1 to 6, wherein the temperature in the core-B after step d) is at most 150°C.

8. The process for the production of multilayer lignocellulose materials according to any of claims 1 to 6, wherein the temperature in the core-B after step d) is at least 60°C.

9. The process for the production of multilayer lignocellulose materials according to any of claims 1 to 6, wherein the temperature difference between the core-B and the outer layers DS-A and DS-C after step d) is at least 5°C.

10. The process for the production of multilayer lignocellulose materials according to any of claims 1 to 6, wherein the temperature difference between the core-B and the outer layers DS-A and DS-C after step d) is at most 50°C.

11. The process for the production of multilayer lignocellulose materials according to any of claims 1 to 10, wherein the multilayer lignocellulose material comprises, in the core, from 0.2 to 2.5% by weight of component F) .

12. The process for the production of multilayer lignocellulose materials according to any of claims 1 to 10, wherein the multilayer lignocellulose material comprises, in the core, from 0.25 to 2% by weight of component F).

13. The process for the production of multilayer lignocellulose materials according to any of claims 1 to 12, wherein no component K) is added to the mixture of components G) to J).

14. A multilayer lignocellulose material produced by a process for the batchwise or continuous, preferably continuous production of multilayer lignocellulose materials with a core and with at least one upper and one lower outer layer, comprising the following steps:

a) mixing of the components of the individual layers separately from one another,
b) layer-by-layer scattering of the mixtures for the core layer and for the outer layers to give a mat,
c) precompaction after the scattering of the individual layers,
d) application of a high-frequency electrical field before, during and/or after the precompaction, and then
e) hot pressing,

where, in step a), f
or the core, the lignocellulose particles A) [component A)] are mixed with

B) from 0 to 25% by weight of expanded plastics particles with bulk density in the range from 10 to 150 kg/m$^3$ [component B)],
C) from 1 to 15% by weight of one or more binders selected from the group consisting of aminoplastic resin and organic isocyanate having at least two isocyanate groups [component C)],
D) from 0 to 3% by weight of ammonium salts [component D)],
E) from 0 to 5% by weight of additives [component E)] and
F) from 0.1 to 3% by weight of alkali metal salts or alkaline earth metal salts from the group of the sulfates, nitrates, halides and mixtures of these [component F)],
and for the outer layers, the lignocellulose particles G) [component G)] are mixed with
H) from 1 to 15% by weight of one or more binders selected from the group consisting of aminoplastic resin and organic isocyanate having at least two isocyanate groups [component H)],
I) from 0 to 2% by weight of ammonium salts [component I)],
J) from 0 to 5% by weight of additives [component J)] and
K) from 0 to 2% by weight of alkali metal salts or alkaline earth metal salts from the group of the sulfates, nitrates, halides and mixtures of these [component K)],

wherein, after step a), the mixture for the core comprises, based on the total dry weight of the mixture of components A) to F) from 3 to 15% by weight of water, the mixture(s) for the outer layers comprise(s), based on the total dry weight of the mixture (s) of components G) to K), from 5 to 20% by weight of water, and the following conditions are met:

$$\text{component F)} \geq 1.1 \cdot \text{component K)}$$

and

$$[\text{component F)} + \text{component D)}] \geq 1.1 \cdot [\text{component K)} + \text{component I)}].$$

15. A multilayer lignocellulose material produced according to claim 1, wherein the multilayer lignocellulose material comprises, in the core, from 0.2 to 2.5% by weight of component F).

16. A multilayer lignocellulose material produced according to claim 1, wherein the multilayer lignocellulose material comprises, in the core, from 0.25 to 2% by weight of component F).

17. The multilayer lignocellulose material according to claim 14, wherein the multilayer lignocellulose material comprises, in the core, from 0.2 to 2.5% by weight of component F).

18. The multilayer lignocellulose material according to claim 14, wherein the multilayer lignocellulose material comprises, in the core, from 0.25 to 2% by weight of component F).

19. A multilayer lignocellulose material with a core and with at least one upper and one lower outer layer according to claim 1, where the core comprises, based on the lignocellulose particles

A) [component A)], the following components:
B) from 0 to 25% by weight of expanded plastics particles with bulk density in the range from 10 to 150 kg/m$^3$ [component B)],
C) from 1 to 15% by weight of one or more binders selected from the group consisting of aminoplastic resin and organic isocyanate having at least two isocyanate groups [component C)],
D) from 0 to 3% by weight of ammonium salts [component D)],
E) from 0 to 5% by weight of additives [component E)] and
F) from 0.1 to 3% by weight of alkali metal salts or alkaline earth metal salts from the group of the sulfates, nitrates, halides and mixtures of these [component F)],

and where the outer layers comprise, based on the lignocellulose particles G) [component G)], the following components:

H) from 1 to 15% by weight of one or more binders selected from the group consisting of aminoplastic resin and organic isocyanate having at least two isocyanate groups [component H)],
I) from 0 to 2% by weight of ammonium salts [component I)],
J) from 0 to 5% by weight of additives [component J)] and
K) from 0 to 2% by weight of alkali metal salts or alkaline earth metal salts from the group of the sulfates, nitrates, halides and mixtures of these [component K)],
and the following conditions are met:

$$\text{component F)} \geq 1.1 \cdot \text{component K)}$$

and

$$[\text{component F)} + \text{component D)}] \geq 1.1 \cdot [\text{component K)} + \text{component I)}].$$

20. The multilayer lignocellulose material with a core and with at least one upper and one lower outer layer according to any of claims 14 to 19, wherein the total thickness of said material is from 0.5 to 100 mm.

21. The multilayer lignocellulose material with a core and with at least one upper and one lower outer layer according to any of claims 14 to 20, wherein the average density of said material is from 300 to 700 kg/m$^3$.

22. The multilayer lignocellulose material according to any of claims 14 to 21, wherein the difference between density maximum in the outer layers and density minimum in the core is at least 50 kg/m$^3$.

23. The multilayer lignocellulose material according to any of claims 14 to 22, wherein the outer layers DS-A and DS-C comprise no components K).

24. The multilayer lignocellulose material according to any of claims 14 to 23, obtainable by a process according to any of claims 1 to 13.

25. The use of the multilayer lignocellulose materials according to any of claims 14 to 24 or obtained by a process according to any of claims 1 to 13 in the construction industry, in the fitting-out of interiors, in shopfitting and construction of exhibition stands, as material for furniture or as packaging material.

26. The use of a multilayer lignocellulose material according to any of claims 14 to 24 or obtained by a process according to any of claims 1 to 13 as roof paneling or wall paneling, infill, shuttering, floors, door inlays, partitions or shelving or as support material for unit furniture, as door material, as worktop, as kitchen front, as outer layers in sandwich structures, or as elements in tables, chairs, and upholstered furniture.

**Revendications**

1. Procédé de fabrication discontinue ou continue de matériaux lignocellulosiques multicouches comprenant un noyau et au moins une couche de recouvrement supérieure et une couche de recouvrement inférieure, contenant les étapes de procédé suivantes :

a) le mélange des composants des couches individuelles séparément les uns des autres,
b) la distribution en couches des mélanges pour la couche de noyau et pour les couches de recouvrement pour former un mat,
c) le pré-compactage après la distribution des couches individuelles,
d) l'application d'un champ électrique de fréquence élevée avant, pendant et/ou après le pré-compactage, puis
e) la compression à chaud,

à l'étape de procédé a),

pour le noyau, les particules lignocellulosiques A) [composant A)] étant mélangées avec

B) 0 à 25 % en poids de particules de matière plastique expansées ayant une densité apparente dans la plage allant de 10 à 150 kg/m$^3$ [composant B)],

C) 1 à 15 % en poids d'un ou de plusieurs liants choisis dans le groupe constitué par une résine aminoplaste et un isocyanate organique contenant au moins deux groupes isocyanate [composant C)],

D) 0 à 3 % en poids de sels d'ammonium [composant D)],

E) 0 à 5 % en poids d'additifs [composant E)], et

F) 0,1 à 3 % en poids de sels alcalins ou alcalino-terreux du groupe constitué par les sulfates, les nitrates, les halogénures ou leur mélange [composant F)], pour les couches de recouvrement, les particules lignocellulosiques G) [composant G)] étant mélangées avec H) 1 à 15 % en poids d'un ou de plusieurs liants choisis dans le groupe constitué par une résine aminoplaste et un isocyanate organique contenant au moins deux groupes isocyanate [composant H)],

I) 0 à 2 % en poids de sels d'ammonium [composant I)],

J) 0 à 5 % en poids d'additifs [composant J)], et

K) 0 à 2 % en poids de sels alcalins ou alcalino-terreux du groupe constitué par les sulfates, les nitrates, les halogénures ou leur mélange [composant K)], après l'étape de procédé a), le mélange pour le noyau contenant, par rapport au poids sec total du mélange des composants A) à F), entre 3 et 15 % en poids d'eau, le ou les mélanges pour les couches de recouvrement contenant, par rapport au poids sec total du ou des mélanges des composants G) à K), entre 5 et 20 % en poids d'eau, et les conditions

$$\text{composant F)} \geq 1{,}1 \cdot \text{composant K)}$$

et

$$[\text{composant F)} + \text{composant D)]} \geq 1{,}1 \cdot [\text{composant K)} + \text{composant I)]}$$

étant satisfaites.

2. Procédé de fabrication de matériaux lignocellulosiques multicouches selon la revendication 1, **caractérisé en ce que** le procédé est réalisé en continu.

3. Procédé de fabrication de matériaux lignocellulosiques multicouches selon l'une quelconque des revendications 1 ou 2, **caractérisé en ce que** la condition composant F) ≥ 1,5 • composant K) est satisfaite.

4. Procédé de fabrication de matériaux lignocellulosiques multicouches selon l'une quelconque des revendications 1 ou 2, **caractérisé en ce que** la condition

$$[\text{composant F)} + \text{composant D)]} \geq 1{,}5 \cdot [\text{composant K)} + \text{composant I)]}$$

est satisfaite.

5. Procédé de fabrication de matériaux lignocellulosiques multicouches selon l'une quelconque des revendications 1 ou 2, **caractérisé en ce que** les conditions

$$[\text{composant F)} + \text{composant D)]} \geq 1{,}5 \cdot [\text{composant K)} + \text{composant I)]}$$

et

$$\text{composant F)} \geq 1{,}5 \cdot \text{composant K)},$$

sont satisfaites.

6. Procédé de fabrication de matériaux lignocellulosiques multicouches selon l'une quelconque des revendications 1 ou 2, **caractérisé en ce que** les conditions

$$[\text{composant F)} + \text{composant D)}] \geq 5 \cdot [\text{composant K)} + \text{composant I)}]$$

et

$$\text{composant F)} \geq 5 \cdot \text{composant K)},$$

sont satisfaites.

7. Procédé de fabrication de matériaux lignocellulosiques multicouches selon l'une quelconque des revendications 1 à 6, **caractérisé en ce que** la température dans le noyau B après l'étape de procédé d) est d'au plus 150 °C.

8. Procédé de fabrication de matériaux lignocellulosiques multicouches selon l'une quelconque des revendications 1 à 6, **caractérisé en ce que** la température dans le noyau B après l'étape de procédé d) est d'au moins 60 °C.

9. Procédé de fabrication de matériaux lignocellulosiques multicouches selon l'une quelconque des revendications 1 à 6, **caractérisé en ce que** la différence de température entre le noyau B et les couches de recouvrement DS-A et DS-C après l'étape de procédé d) est d'au moins 5 °C.

10. Procédé de fabrication de matériaux lignocellulosiques multicouches selon l'une quelconque des revendications 1 à 6, **caractérisé en ce que** la différence de température entre le noyau B et les couches de recouvrement DS-A et DS-C après l'étape de procédé d) est d'au plus 50 °C.

11. Procédé de fabrication de matériaux lignocellulosiques multicouches selon l'une quelconque des revendications 1 à 10, **caractérisé en ce que** les matériaux lignocellulosiques multicouches contiennent 0,2 à 2,5 % en poids du composant F) dans le noyau.

12. Procédé de fabrication de matériaux lignocellulosiques multicouches selon l'une quelconque des revendications 1 à 10, **caractérisé en ce que** les matériaux lignocellulosiques multicouches contiennent 0,25 à 2 % en poids du composant F) dans le noyau.

13. Procédé de fabrication de matériaux lignocellulosiques multicouches selon l'une quelconque des revendications 1 à 12, **caractérisé en ce qu'**aucun composant K) n'est ajouté au mélange des composants G) à J) .

14. Matériaux lignocellulosiques multicouches, fabriqués par un procédé de fabrication discontinue ou continue, de préférence continue, de matériaux lignocellulosiques multicouches comprenant un noyau et au moins une couche de recouvrement supérieure et une couche de recouvrement inférieure, contenant les étapes de procédé suivantes :

    a) le mélange des composants des couches individuelles séparément les uns des autres,
    b) la distribution en couches des mélanges pour la couche de noyau et pour les couches de recouvrement pour former un mat,
    c) le pré-compactage après la distribution des couches individuelles,
    d) l'application d'un champ électrique de fréquence élevée avant, pendant et/ou après le pré-compactage, puis
    e) la compression à chaud,

à l'étape de procédé a),
pour le noyau, les particules lignocellulosiques A) [composant A)] étant mélangées avec

B) 0 à 25 % en poids de particules de matière plastique expansées ayant une densité apparente dans la plage allant de 10 à 150 kg/m$^3$ [composant B)],

C) 1 à 15 % en poids d'un ou de plusieurs liants choisis dans le groupe constitué par une résine aminoplaste et un isocyanate organique contenant au moins deux groupes isocyanate [composant C)],

D) 0 à 3 % en poids de sels d'ammonium [composant D)],

E) 0 à 5 % en poids d'additifs [composant E)], et

F) 0,1 à 3 % en poids de sels alcalins ou alcalino-terreux du groupe constitué par les sulfates, les nitrates, les halogénures ou leur mélange [composant F)], pour les couches de recouvrement, les particules lignocellulosiques G) [composant G)] étant mélangées avec H) 1 à 15 % en poids d'un ou de plusieurs liants choisis dans le groupe constitué par une résine aminoplaste et un isocyanate organique contenant au moins deux groupes isocyanate [composant H)],

I) 0 à 2 % en poids de sels d'ammonium [composant I)],

J) 0 à 5 % en poids d'additifs [composant J)], et

K) 0 à 2 % en poids de sels alcalins ou alcalino-terreux du groupe constitué par les sulfates, les nitrates, les halogénures ou leur mélange [composant K)], après l'étape de procédé a), le mélange pour le noyau contenant, par rapport au poids sec total du mélange des composants A) à F), entre 3 et 15 % en poids d'eau, le ou les mélanges pour les couches de recouvrement contenant, par rapport au poids sec total du ou des mélanges des composants G) à K), entre 5 et 20 % en poids d'eau, et les conditions

$$\text{composant F)} \geq 1,1 \cdot \text{composant K)}$$

et

$$[\text{composant F)} + \text{composant D)}] \geq 1,1 \cdot [\text{composant K)} + \text{composant I)}]$$

étant satisfaites.

15. Matériaux lignocellulosiques multicouches fabriqués selon la revendication 1, les matériaux lignocellulosiques multicouches contenant 0,2 à 2,5 % en poids du composant F) dans le noyau.

16. Matériaux lignocellulosiques multicouches fabriqués selon la revendication 1, les matériaux lignocellulosiques multicouches contenant 0,25 à 2 % en poids du composant F) dans le noyau.

17. Matériaux lignocellulosiques multicouches selon la revendication 14, **caractérisés en ce que** les matériaux lignocellulosiques multicouches contiennent 0,2 à 2,5 % en poids du composant F) dans le noyau.

18. Matériaux lignocellulosiques multicouches selon la revendication 14, **caractérisés en ce que** les matériaux lignocellulosiques multicouches contiennent 0,25 à 2 % en poids du composant F) dans le noyau.

19. Matériaux lignocellulosiques multicouches comprenant un noyau et au moins une couche de recouvrement supérieure et une couche de recouvrement inférieure selon la revendication 1, dans lesquels le noyau contient, par rapport aux particules lignocellulosiques A) [composant A)], les composants suivants :

B) 0 à 25 % en poids de particules de matière plastique expansées ayant une densité apparente dans la plage allant de 10 à 150 kg/m$^3$ [composant B)],

C) 1 à 15 % en poids d'un ou de plusieurs liants choisis dans le groupe constitué par une résine aminoplaste et un isocyanate organique contenant au moins deux groupes isocyanate [composant C)],

D) 0 à 3 % en poids de sels d'ammonium [composant D)],

E) 0 à 5 % en poids d'additifs [composant E)], et

F) 0,1 à 3 % en poids de sels alcalins ou alcalino-terreux du groupe constitué par les sulfates, les nitrates, les halogénures ou leur mélange [composant F)], et dans lesquels les couches de recouvrement contiennent, par rapport aux particules lignocellulosiques G) [composant G)], les composants suivants :

H) 1 à 15 % en poids d'un ou de plusieurs liants choisis dans le groupe constitué par une résine aminoplaste et un isocyanate organique contenant au moins deux groupes isocyanate [composant H)],

I) 0 à 2 % en poids de sels d'ammonium [composant I)],

J) 0 à 5 % en poids d'additifs [composant J)], et

K) 0 à 2 % en poids de sels alcalins ou alcalino-terreux du groupe constitué par les sulfates, les nitrates, les halogénures ou leur mélange [composant K)], et les conditions

$$composant\ F) \geq 1,1 \cdot composant\ K)$$

et

$$[composant\ F) + composant\ D)] \geq 1,1 \cdot [composant\ K) + composant\ I)]$$

sont satisfaites.

20. Matériaux lignocellulosiques multicouches comprenant un noyau et au moins une couche de recouvrement supérieure et une couche de recouvrement inférieure selon l'une quelconque des revendications 14 à 19, ceux-ci présentant une épaisseur totale de 0,5 à 100 mm.

21. Matériaux lignocellulosiques multicouches comprenant un noyau et au moins une couche de recouvrement supérieure et une couche de recouvrement inférieure selon l'une quelconque des revendications 14 à 20, ceux-ci présentant une densité moyenne de 300 à 700 kg/m$^3$.

22. Matériau lignocellulosique multicouche selon l'une quelconque des revendications 14 à 21, **caractérisé en ce que** la différence entre la densité maximale dans les couches de recouvrement et la densité minimale dans le noyau est d'au moins 50 kg/m$^3$.

23. Matériau lignocellulosique multicouche selon l'une quelconque des revendications 14 à 22, **caractérisé en ce qu'**aucun composant K) n'est contenu dans les couches de recouvrement DS-A et DS-C.

24. Matériaux lignocellulosiques multicouches selon l'une quelconque des revendications 14 à 23, pouvant être obtenus par un procédé selon l'une quelconque des revendications 1 à 13.

25. Utilisation des matériaux lignocellulosiques multicouches selon l'une quelconque des revendications 14 à 24 ou obtenus par un procédé selon l'une quelconque des revendications 1 à 13 dans le bâtiment, dans l'aménagement intérieur, dans la construction de magasins et de stands, en tant que matériau pour meubles ou en tant que matériau d'emballage.

26. Utilisation d'un matériau lignocellulosique multicouche selon l'une quelconque des revendications 14 à 24 ou obtenu par un procédé selon l'une quelconque des revendications 1 à 13 en tant que panneaux de toits et de murs, remplissages, coques, planchers, couches intérieures de portes, parois de séparation, étagères ou en tant que matériau support pour meubles de rangement, en tant qu'étagère, en tant que matériau de porte, en tant que plan de travail, en tant que façade de cuisine, en tant que couches de recouvrement dans des constructions en sandwich, en tant qu'éléments dans des tables, des sièges et des meubles rembourrés.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9728936 A
- US 3649396 A
- DE 4412515 A
- DE 2908470 C
- WO A A
- US 5112875 A

**In der Beschreibung aufgeführte Nicht-Patentliteratur**

- Zeppenfeld, Grunwald, Klebstoffe in der Holz - und Möbelindustrie. DRW Verlag, 2005, 286
- **A. WAGENFÜHR ; F. SCHOLZ.** Taschenbuch der Holztechnik. Carl Hanser Verlag, 2012, 84
- **M. DUNKY ; P. NIEMZ.** Holzwerkstoffe und Leime. Springer Verlag Heidelberg, 2002, 119-121
- **H.-J. DEPPE ; K. ERNST.** Taschenbuch der Spanplatten Technik. DRW - Verlag Weinbrenner, 2000, 232-254
- **H.-J. DEPPE ; K. ERNST.** MDF- Mitteldichte Faserplatten. DRW- Verlag Weinbrenner, 1996, 93-104
- **M. DUNKY ; P. NIEMZ.** Holzwerkstoffe und Leime. Springer Verlag, 2002, 91-156
- Bedienungsanleitung/Handbuch Korngrößenmesssystem CAMSIZER®, Retsch Technology GmbH, Version 0445.506, Release 002, Revision 009. 25. Juni 2010
- Polystyrol. Kunststoff Handbuch 1996. 1996, vol. 4, 640-673
- Polystyrol. Ullmann's Encyclopedia. 1996, vol. 4, 567-598
- Aminoplaste. Ullmanns Enzyklopädie der technischen Chemie. Verlag Chemie, 1973, 403-424
- Amino Resins. Ullmann's Encyclopedia of Industrial Chemistry. VCH Verlagsgesellschaft, 1985, vol. A2, 115-141
- **M. DUNKY ; P. NIEMZ.** Holzwerkstoffe und Leime. Springer, 251-259
- Polyurethane. **BECKER/BRAUN.** Kunststoff Handbuch. 1993, vol. 7, 17-21, 76-88, 665-671
- Polyurethane. **BECKER/BRAUN.** Kunststoff Handbuch. 1993, vol. 7, 18
- Dirk Grunwald, Klebstoffe in der Holz- und Möbelindustrie. DRW-Verlag, 268